(19) Europäisches Patentamt
European Patent Office
Office européen des brevets

(11) **EP 4 678 273 A1**

(12) **EUROPEAN PATENT APPLICATION**
published in accordance with Art. 153(4) EPC

(43) Date of publication:
14.01.2026  Bulletin 2026/03

(21) Application number: 24766933.6

(22) Date of filing: 27.02.2024

(51) International Patent Classification (IPC):
*B01D 63/02* (2006.01)          *B01D 65/02* (2006.01)
*B01D 69/00* (2006.01)          *B01D 69/02* (2006.01)
*B01D 69/08* (2006.01)

(52) Cooperative Patent Classification (CPC):
B01D 61/18; B01D 63/00; B01D 63/02;
B01D 65/02; B01D 69/00; B01D 69/02; B01D 69/08

(86) International application number:
PCT/JP2024/006949

(87) International publication number:
WO 2024/185562 (12.09.2024 Gazette 2024/37)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.03.2023  JP 2023034334

(71) Applicant: Toray Industries, Inc.
Tokyo 103-8666 (JP)

(72) Inventors:
• SHIMURA Shun
Otsu-shi, Shiga 520-8558 (JP)
• TACHIBANA Takashi
Otsu-shi, Shiga 520-8558 (JP)
• HANAKAWA Masayuki
Tokyo 103-8666 (JP)

(74) Representative: Hoefer & Partner Patentanwälte
mbB
Pilgersheimer Straße 20
81543 München (DE)

(54) **HOLLOW FIBER MEMBRANE MODULE, FILTRATION OPERATION METHOD, AND FILTRATION APPARATUS**

(57)    An object of the present invention is to provide a hollow fiber membrane module that is highly stable in terms of removal rate in order to address the problem that a surface of a hollow fiber membrane is abraded due to contact between a liquid to be filtered and the hollow fiber membrane to deteriorate removal performance of the hollow fiber membrane when a high turbidity liquid is filtered. Provided is a hollow fiber membrane module including: at least a tubular case having a first end and a second end in a height direction of a tubular member; a plurality of hollow fiber membranes accommodated between the first end and the second end in the tubular case; a liquid inlet through which a to-be-filtered liquid flows into the tubular case; and a permeate outlet through which a permeate having permeated through the hollow fiber membrane flows out from the tubular case, the liquid inlet being communicated with outer surfaces of the plurality of hollow fiber membranes; and a first potting part which bonds end parts of the plurality of hollow-fiber membranes located on the first end side of the tubular case while letting the end parts be open, wherein when a cross-sectional area in the tubular case is taken as 100% in a cross-section perpendicular to the height direction of the tubular case, a ratio of an area occupied by the plurality of hollow fiber membranes and the hollow parts thereof (hereinafter referred to as a filling rate) is 40 to 80%, and a surface elastic modulus of the outer side of the plurality of hollow fiber membranes is 200 to 500 MPa.

EP 4 678 273 A1

【FIG.1】

**Description**

TECHNICAL FIELD

The present invention relates to a hollow fiber membrane module, a filtration operation method using a hollow fiber membrane module, and a filtration apparatus including a hollow fiber membrane module.

BACKGROUND ART

In recent years, separation membranes such as microfiltration membranes and ultrafiltration membranes are used in various fields such as water treatment fields such as water purification and wastewater treatment, medical fields such as blood purification, and food industry fields. A treatment using a separation membrane is greatly advantageous in that the treated water quality is high and stable as compared with a treatment, such as a precipitation method or sand filtration, which has been conventionally performed. Therefore, in particular, in the water treatment fields, a treatment using a separation membrane is widely used on a large scale. In recent years, in order to secure water resources with increasing population, a membrane module capable of stably obtaining high quality of treated water for a long period of time is required even for a liquid to be filtered containing a large amount of suspended substances (hereinafter also referred to as "turbid matter" in some cases) which has been considered to be difficult to filter. A hollow fiber-like separation membrane can fill a large membrane area with respect to an installation area of a membrane module, and is frequently used.

However, when a raw solution containing a large amount of turbid matter (hereinafter also referred to as "high turbidity liquid" in some cases) is filtered, the surface of the membrane may be rubbed and damaged by substances that do not permeate the membrane, such as turbid matter and organic matter contained in the high turbidity liquid. When such a damage due to rubbing occurs, components to be removed by the separation membrane may leak to the permeate side, and filtration may have to be interrupted. For example, when desired removability cannot be maintained in a water purification plant, there is a risk that bacteria and viruses are mixed in drinking water, and thus it is necessary to replace the membrane module with a new membrane module, and a large cost is required.

The suppression of damage due to rubbing of the separation membrane, that is, performance deterioration due to abrasion has not been studied much so far. Patent Document 1 discloses a technique for suppressing a decrease in water permeability by increasing an opening ratio of a surface of a separation membrane.

When the high turbidity liquid is filtered, turbid matter, organic matter, or the like contained in the high turbidity liquid accumulates in the membrane module, and the pores of the separation membrane or the space between the separation membrane and separation membrane inside the membrane module may be clogged. When clogging occurs, the processing speed of the membrane module may decrease and the filtration may have to be interrupted. In such cases, the membrane module is washed using chemicals. When the membrane is not recovered even in the case of performing chemical washing, or when the membrane is deteriorated by chemicals and the removal rate is lowered, the membrane module is replaced with a new one, and thus a great cost is required.

In order to suppress performance deterioration due to clogging of the membrane module, there is a method of physically washing the membrane module before clogging completely progresses. Specifically, backpressure washing in which a permeate, water, or the like is caused to pass from the permeation side of the separation membrane to the raw solution side to push out substances adhering to the inside of membrane pores or the surface of the membrane, air washing in which gas is supplied from the lower part of the hollow fiber membrane module and the hollow fiber membrane is shaken to physically wash the hollow fiber membrane (see, for example, Patent Document 2), and a flushing method in which a raw solution or a chemical solution is caused to flow at a high linear velocity to the surface of the membrane on the raw solution side of the hollow fiber membrane (see, for example, Patent Document 3) are disclosed.

PRIOR ART DOCUMENT

PATENT DOCUMENTS

Patent Document 1: International Publication No. 2015/104871
Patent Document 2: Japanese Patent Laid-open Publication No. H11-342320
Patent Document 3: Japanese Patent Laid-open Publication No. 2010-005615
Patent Document 4: International Publication No. 2002/070115

SUMMARY OF THE INVENTION

PROBLEMS TO BE SOLVED BY THE INVENTION

However, in the technique described in Patent Document 1, the surface opening ratio of the separation membrane is increased to suppress water permeability performance deterioration due to clogging and water permeability performance deterioration due to membrane surface abrasion, but the water permeability performance before abrasion occurs is improved, and even when the performance deterioration occurs due to abrasion, the deterioration of the water permeability performance is only suppressed. That is, the technique of Patent Document 1 cannot suppress the abrasion phenomenon itself of the membrane surface. No consideration has been made on the viewpoint of maintaining sufficient removability and obtaining safe and secure water quality when a high turbidity liquid is treated.

When the air washing disclosed in Patent Document 2 or the flushing disclosed in Patent Document 3 for the purpose of suppressing clogging is performed, the turbid matter flows in the vicinity of the hollow fiber membrane at a high speed, so that the turbid matter having a large momentum easily collide with the hollow fiber membrane, and the hollow fiber membrane is particularly likely to be abraded. That is, in the techniques of Patent Documents 2 and 3, although the adhered substance is removed and clogging is suppressed, there is a concern that abrasion is accelerated and the membrane surface is damaged.

Therefore, an object of the present invention is to provide a hollow fiber membrane module that is highly stable in terms of removal rate by suppressing abrasion when a high turbidity liquid is filtered. By suppressing abrasion, physical washing of the hollow fiber membrane that efficiently suppresses clogging can be performed, and stable filtration for a long period of time can be performed. As a result, there is provided a filtration method capable of stably obtaining a permeate having safe and secure water quality for a long period of time even for a high turbidity liquid that is difficult to treat.

SOLUTIONS TO THE PROBLEMS

To solve the problems described above, the present invention provides a hollow fiber membrane module having the following configurations.

1. A hollow fiber membrane module including: at least a tubular case having a first end and a second end in a height direction of a tubular member; a plurality of hollow fiber membranes accommodated between the first end and the second end in the tubular case; a liquid inlet through which a to-be-filtered liquid flows into the tubular case; and a permeate outlet through which a permeate having permeated through the hollow fiber membrane flows out from the tubular case, the liquid inlet being communicated with outer surfaces of the plurality of hollow fiber membranes; and a first potting part which bonds end parts of the plurality of hollow-fiber membranes located on the first end side of the tubular case while letting the end parts be open, in which when a cross-sectional area in the tubular case is taken as 100% in a cross-section perpendicular to the height direction of the tubular case, a ratio of an area occupied by the plurality of hollow fiber membranes including the hollow parts (hereinafter referred to as a filling rate) is 40% to 80%, and a surface elastic modulus of the outer surfaces of the plurality of hollow fiber membranes is 200 MPa to 500 MPa.

2. The hollow fiber membrane module according to 1, in which the number of pores observed in the outer surface of the hollow fiber membrane (hereinafter referred to as surface pores) per unit area is 200 pores/$\mu$m$^2$ to 2000 pores/$\mu$m$^2$.

3. The hollow fiber membrane module according to 1 or 2, in which an opening ratio is 1% to 10% with respect to the outer surface of the hollow fiber membrane.

4. The hollow fiber membrane module according to any one of 1 to 3, in which an average pore diameter of the outer surface of the hollow fiber membrane (hereinafter referred to as a surface pore diameter) is 5 nm to 20 nm.

5. The hollow fiber membrane module according to any one of 2 to 4, in which a value $\alpha$ obtained by dividing the number [pores/$\mu$m$^2$] of surface pores per unit area by the surface pore diameter [nm] is 30 pores/$\mu$m$^2$/nm to 150 pores/$\mu$m$^2$/nm.

6. The hollow fiber membrane module according to any one of 1 to 5, in which in a sliced cross-section of the hollow fiber membrane, a cross-sectional porosity in a region from the outer surface of the hollow fiber membrane to 5 $\mu$m (hereinafter referred to as an outer surface part) is 20% to 50%.

7. The hollow fiber membrane module according to any one of 1 to 6, in which hollow fiber membrane structures between pores in the outer surface part of the hollow fiber membrane is used as columns, and an average value of thicknesses of the columns is 20 nm to 60 nm.

8. The hollow fiber membrane module according to any one of 1 to 7, in which a density of the columns is 10 columns/um to 50 columns/um.

9. The hollow fiber membrane module according to any one of 1 to 8, including a second potting part bonding a bundle of the plurality of hollow fiber membranes located on the second end side of the tubular case, in which when an average length of the plurality of hollow fiber membranes present between a second end part side of the first potting part and a first end part side of the second potting part is denoted as X, and a length in the height direction between the second end part side of the first potting part and the first end part side of the second potting part in the tubular case is denoted as Y, a relationship of $2 \leq (X - Y)/X \times 100 \leq 20$ (%) is established.

10. The hollow fiber membrane module according to any one of 1 to 9, in which when a to-be-filtered liquid having a turbidity of 3 to 50 NTU is filtered and a permeate is separated from the liquid subjected to filtration, a virus removal rate of the permeate is 4 log or more.

11. The hollow fiber membrane module according to any one of 1 to 10, in which when a to-be-filtered liquid having a turbidity of 3 to 50 NTU is filtered and a permeate is separated from the to-be-filtered liquid, an SDI of the permeate is 3 or less.

12. A filtration operation method of a hollow fiber membrane module, including supplying a to-be-filtered liquid having a turbidity of 3 to 50 NTU to the hollow fiber membrane module according to any one of 1 to 11 and separating a permeate from the to-be-filtered liquid.

13. A filtration operation method of a hollow fiber membrane module, including supplying a to-be-filtered liquid having a total organic carbon (hereinafter referred to as TOC) of 4 to 30 mg/L to the hollow fiber membrane module according to any one of 1 to 12 and separating a permeate from the to-be-filtered liquid.

14. A filtration operation method of the hollow fiber membrane module according to any one of 1 to 11, the filtration operation method including:

(1) a membrane separation step of supplying a raw solution to the hollow fiber membrane module and separating a suspended substance and a liquid; and
(2) a washing step of stopping the step (1) and washing the suspended substance accumulated on an outer surface of a hollow fiber membrane or between hollow fiber membranes, in which

the washing step (2) performs an air-washing operation of causing a mixed flow of the raw solution or a liquid having at least a turbidity or TOC equal to or less than the turbidity or TOC of the raw solution and a gas at a flow rate of 0.3 m/s or more and 5.0 m/s or less at a membrane surface linear velocity on the outer surface side of the hollow fiber membrane.

15. A hollow fiber membrane having an opening ratio of 1% to 10% with respect to an area of an outer surface of the hollow fiber membrane and a surface elastic modulus of the outer surface of the hollow fiber membrane of 200 MPa to 500 MPa. In order to achieve the surface elastic modulus of the outer surface of the hollow fiber membrane of 200 MPa to 500 MPa, in a sliced cross-section of the hollow fiber membrane, a cross-sectional porosity in a region from the outer surface to 5 $\mu$m (hereinafter referred to as an outer surface part) is preferably 20% to 50%. When hollow fiber membrane structures between pores in the outer surface part of the hollow fiber membrane is used as columns, the average value of thicknesses of the columns is preferably 20 nm to 60 nm, and the density of the columns is preferably 10 columns/$\mu$m to 50 columns/$\mu$m.

16. A filtration apparatus including the hollow fiber membrane module or the hollow fiber membrane according to any one of 1 to 11 or 15.

EFFECTS OF THE INVENTION

According to the present invention, since the surface elastic modulus of the outer side of the hollow fiber membrane in contact with the to-be-filtered liquid containing a large amount of turbid matter is 200 MPa or more, abrasion of the hollow fiber membrane can be suppressed, and a decrease in removal rate can be reduced. Thereby, it is possible to provide a filtration method capable of performing physical washing of the hollow fiber membrane module without reducing the removal rate due to abrasion, filtering a high turbidity raw solution for a long period of time, and obtaining permeate water having safe and secure water quality.

BRIEF DESCRIPTION OF THE DRAWINGS

Fig. 1 is an example of a hollow fiber membrane module of the present invention.
Fig. 2 is an explanatory view of a wear test of a hollow fiber membrane outer surface.
Fig. 3 is an example of a TEM image of a cross-section of a hollow fiber membrane of the present invention.
Fig. 4 is an enlarged view of an outer surface part of Fig. 3.
Fig. 5 is a schematic view showing a process of forming a porous membrane on the outer surface part of the hollow fiber membrane.
Fig. 6 shows a result of the wear test of the hollow fiber membrane outer surface.

EMBODIMENTS OF THE INVENTION

Hereinafter, an embodiment of the present invention will be described in detail with reference to the drawings, but the present invention is not limited thereto at all. In the present specification, "mass" and "weight" are synonymous. The "liquid to be filtered" refers to the target liquid of filtration before permeating the separation membrane, and the "permeate" refers to a liquid after permeating the separation membrane. The "liquid to be filtered" and "to-be-filtered liquid" or "liquid subjected to filtration" have the same meaning, and refer to the target liquid of filtration before permeating the separation membrane. The high turbidity raw solution refers to a liquid containing a large amount of turbid matter or organic matter contained in the liquid to be filtered. Examples thereof include a liquid having a turbidity of 3 NTU or more and a liquid having a total organic carbon (hereinafter referred to as TOC) of 4 mg/L or more. Irreversible damage of a membrane surface when turbid matter or organic matter comes into contact with the membrane surface is called abrasion. A hollow fiber membrane module for suppressing abrasion of the present invention will be described below.

<Hollow fiber membrane module>

A hollow fiber membrane module of the present invention includes at least a tubular case having a first end and a second end in a height direction of a tubular member, a plurality of hollow fiber membranes accommodated in the first end and the second end of the tubular case, a liquid inlet through which a to-be-filtered liquid flows into the tubular case, and a permeate outlet through which a permeate having permeated through the hollow fiber membrane and separated flows out.

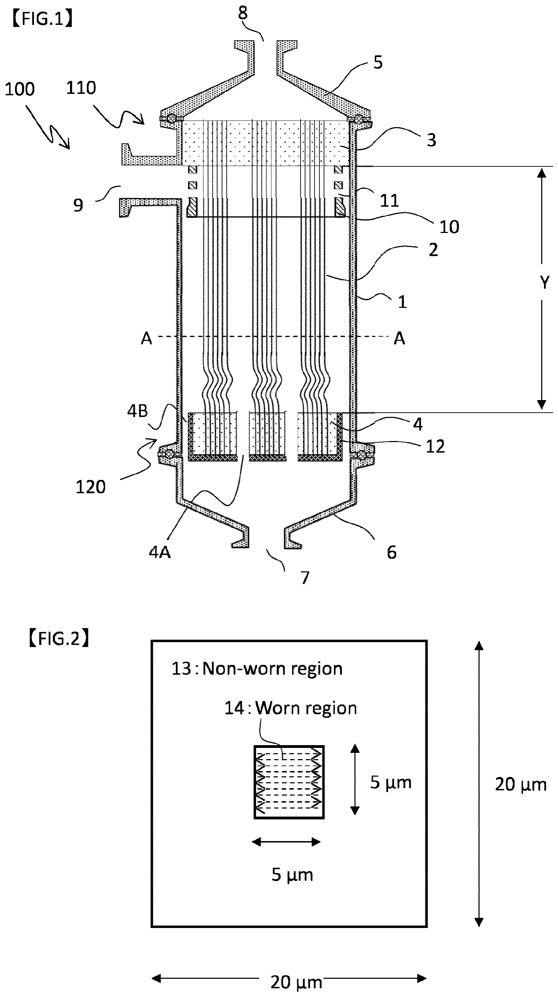

In Fig. 1, in a hollow fiber membrane module 100, a plurality of hollow fiber membranes 2 are accommodated as a bundle in a tubular case 1 in which a first end and a second end are disposed vertically. A lower cap 6 of Fig. 1 is connected to the tubular case 1 and is provided with a liquid inlet 7. An upper cap 5 is connected to the tubular case 1 and is provided with a permeate outlet 8. The tubular case 1 is provided with a liquid outlet 9 at a position away from the liquid inlet 7.

The liquid inlet 7 is communicated with outer surfaces of the hollow fiber membranes 2, a first potting part 3 bonding the plurality of hollow fiber membranes in a state where hollow parts are opened at end parts of the plurality of hollow fiber membranes 2 located on the first end side of the tubular case 1 is provided, and end openings of the hollow parts of the hollow fiber membranes 2 are communicated with a permeate outlet 8. Thereby, the to-be-filtered liquid that has flowed in from the liquid inlet 7 is separated from the outer surface of the hollow fiber membrane 2 toward the inside, and the liquid that permeates the hollow fiber membrane can be taken out from the permeate outlet 8. Here, the filling rate of the hollow fiber membrane 2 in the tubular case 1 is required to be 40% to 80%, and the surface elastic modulus of the outer side of the plurality of hollow fiber membranes is required to be 200 MPa to 500 MPa. The filling rate is a ratio occupied by a total area of the plurality of hollow fiber membranes and the hollow parts thereof when a cross-sectional area inside the tubular case is 100% in a cross-section perpendicular to the height direction of the tubular case 1.

Since the liquid inlet 7 is communicated with the outer surfaces of the plurality of hollow fiber membranes 2, it is possible to perform so-called external pressure filtration in which the turbid matter or organic matter contained in the raw solution is filtered in contact with the outer surfaces of the hollow fiber membranes. Since the hollow fiber membrane has a larger surface area on the outer surface than the inner surface, the amount of the turbid matter or organic matter per unit area in contact with the hollow fiber membrane can be reduced, and abrasion can be suppressed. When the proportion of the hollow fiber membrane in the cross-section perpendicular to the height direction of the tubular case, that is, the filling rate is 40% to 80%, the membrane area in the tubular case can be increased in a range in which the concentration of turbid matter in the tubular case is not excessively high. The filling rate is preferably 45% or more, more preferably 50% or more, particularly preferably 55% or more in order to increase the membrane area. The filling rate is preferably 75% or less, more preferably 70% or less, particularly preferably 65% or less in order to reduce the concentration of turbid matter in the tubular case.

When the hollow fiber membrane is a microfiltration membrane or an ultrafiltration membrane, a permeate can be obtained while turbid matter, organic matter, or the like contained in the raw solution is efficiently removed. Among them, an ultrafiltration membrane is preferable because it is easy to increase the surface elastic modulus of the hollow fiber membrane outer surface. The surface on the outer side of the hollow fiber membrane may be referred to as a hollow fiber membrane outer surface, simply, an outer surface.

The inventors have conducted intensive studies, and as a result, have found that it is important to increase the surface elastic modulus of the outer side of the hollow fiber membrane in contact with turbid matter in order to suppress abrasion of the membrane. Conventionally, a hollow fiber membrane having excellent durability is intended for stability of water permeability performance, and the stability of a removal rate for maintaining high removal performance has not been studied. In the technique of Patent Document 1, the presence or absence of changes in the removal rate, the pore diameter, and the pore shape has not been examined, and the suppression of the abrasion itself has not been verified. No attention is paid to the surface elastic modulus of the surface of the hollow fiber membrane. That is, as described above, Patent Document 1 merely improves water permeability performance before abrasion, and is not a technique for suppressing abrasion itself. Therefore, the hollow fiber membrane surface is abraded, and the removal rate decreases.

The stability of the removal rate is a particularly effective and essential function when high-precision filtration is performed with respect to a high turbidity liquid. The object to be removed in the raw solution is, for example, turbid matter, fungi, viruses, polysaccharides, proteins, organic compounds, and complexes thereof. The inventors have found that when the removal rate T of dextran having a weight-average molecular weight of 40,000 Da is 60% or more, it is easy to sufficiently remove components to be removed in water treatment.

Since the surface elastic modulus of the outer side of the hollow fiber membrane in contact with the raw solution containing a large amount of turbid matter is 200 MPa or more, the hollow fiber membrane module of the present invention can suppress abrasion of the hollow fiber membrane and reduce a decrease in removal rate. As a result, it is possible to stably maintain a high removal rate without reducing the removal rate due to abrasion. The surface elastic modulus of the outer surface of the hollow fiber membrane of the present invention is an index of restoring force of the membrane against pushing, and as the restoring force is larger, irreversible deformation is less likely to occur. When irreversible deformation, that is, plastic deformation occurs, the shape of the pore of the hollow fiber membrane changes, and the component to be removed in the hollow fiber membrane easily leaks into the permeate. For example, Patent Document 4 describes a compressive elastic modulus of a hollow fiber membrane, but the compressive elastic modulus of the hollow fiber membrane is not regarded as important, and the range thereof is as low as 1.5 MPa to 10 MPa, and it is not possible to suppress abrasion of the hollow fiber membrane surface.

In the present invention, it was found that by using a hollow fiber membrane having a high surface elastic modulus, even when the turbid matter comes into contact with the hollow fiber membrane and the hollow fiber membrane is rubbed to be abraded, the abrasion is suppressed by a strong restoring force. The surface elastic modulus is preferably 230 MPa or more, more preferably 250 MPa or more, particularly preferably 300 MPa or more in order to exhibit sufficient restoring force when the turbid matter is pressed, and is preferably 450 MPa or less, more preferably 400 MPa or less, particularly preferably 350 MPa in order to suppress cracking when the hollow fiber membrane has toughness and the turbid matter collides. Examples of an embodiment of a hollow fiber membrane in which the surface elastic modulus of the hollow fiber membrane is 200 MPa or more will be described in detail in <Structure of hollow fiber membrane>, <Material of hollow fiber membrane>, and <Method for manufacturing hollow fiber membrane> described later.

As a result of observing the outer surface of the hollow fiber membrane in which a performance change due to abrasion was observed in a physical washing (air washing) test described later with a scanning electron microscope, the inventors have confirmed that the membrane was scraped or deformed in a region of several hundred nm from the surface. Therefore, the surface elastic modulus is preferably measured in a region of several hundred nm from the surface. In the activated carbon used in the physical washing test and the turbid matter contained in the actual liquid to be filtered, particles having different forms exist, and the size thereof is also expected to the distributed. When turbid matter in a sharp form or turbid matter having a large surface roughness comes into contact with the membrane surface, it is presumed that it is important to have a high surface elastic modulus on the surface in a range deeper than the convex portion of the turbid matter.

The surface elastic modulus can be tested and calculated by the method in accordance with ISO14577 using a commercially available nanoindenter. In the case of measuring the hollow fiber membrane, the dried hollow fiber membrane is fixed in the form of a metal or glass plate, the measurement is performed at a maximum load of 0.1 mN, an application time of 15 seconds, and a maximum load holding time of 30 seconds and at room temperature (20°C to 25°C), and the surface elastic modulus is calculated in range of the pushing depth of 0.4 $\mu$m to 0.8 $\mu$m using the Poisson's ratio of the main component constituting the outer surface of the hollow fiber membrane. As the Poisson's ratio, it is possible to use a value of 0.35 in the case of a polyvinylidene fluoride-based resin, a value of 0.37 in the case of polysulfone, a value of 0.40 in the case of polyethersulfone, and a value of 0.30 in the case of cellulose acetate. Among the components constituting the hollow fiber membrane, a component having a weight fraction of 50% or more is regarded as a main component. The main component can be determined by a known technique using a general composition analysis instrument. Examples thereof include IR, NMR, and ICP. The surface elastic modulus is determined by measuring the surface elastic modulus five times with the same hollow fiber membrane while changing a measurement point, measuring three different hollow fiber membranes, and calculating the average of all the measured values.

The variation in surface elastic modulus of the outer surface part of the hollow fiber membrane is preferably small. Since the range of the value of the surface elastic modulus, that is, the distribution is small, it is easy to reduce the concern that abrasion occurs from a place where the surface elastic modulus is low. The distribution of the surface elastic modulus is determined by measuring the surface elastic modulus five times with the same hollow fiber membrane while changing a measurement point, measuring three different hollow fiber membranes, and calculating the coefficient of variation from all the measured values. The coefficient of variation is preferably less than 0.3, more preferably less than 0.25, still more preferably less than 0.2, most preferably less than 0.1.

Next, the shape of the hollow fiber membrane module will be described in detail. An example of the hollow fiber membrane module of the present invention is shown in Fig. 1. A plurality of hollow fiber membranes 2 are accommodated as a bundle in the tubular case 1 in which a first end 110 and a second end 120 are disposed vertically. A lower cap 6 of Fig. 1 is connected to the tubular case 1 and is provided with a liquid inlet 7. An upper cap 5 is connected to the tubular case 1 and is provided with a permeate outlet 8. The tubular case 1 is provided with a liquid outlet 9 at a position away from the liquid inlet 7. It is preferable that a first potting part 3 bonding end parts of a plurality of hollow fiber membranes located on the first end side of the tubular case 1 in an opened state and a second potting part 4 bonding end parts of a plurality of hollow fiber membranes located on the second end side of the tubular case in a sealed state are provided, the liquid inlet 7 is provided so that the raw solution flows into the second potting part 4 side, and the permeate outlet 8 is provided so that the permeate flows out from the first potting part 3 side. Here, the second potting part 4 may bond the end parts of the plurality of hollow fiber membranes in an opened state, and may be sealed with a second potting case 12 or the like covering the end part of the second potting part 4.

The filling rate in the tubular case refers to the proportion of the hollow fiber membrane in the tubular case in the A-A cross-section of Fig. 1. The liquid to be filtered serving as a liquid to be treated is supplied into the hollow fiber membrane module from the liquid inlet 7, comes into contact with the outer side of the hollow fiber membrane 2, is filtered toward the hollow part of the hollow fiber membrane, and is taken out as a treated liquid from the permeate outlet 8 provided in the upper cap 5.

Since a relationship of $2\ (\%) \leq (X - Y)/Y \times 100 \leq 20\ (\%)$ is established between an average length of the hollow fiber membranes present between a second end part side of the first potting part 3 and a first end part side of the second potting part 4 (that is, an average length of the plurality of hollow fiber membranes present between the first potting part 3 and the second potting part 4) X and a length in the height direction between the second end part side of the first potting part and the first end part side of the second potting part in the tubular case (that is, a distance between the first potting part 3 and the second potting part 4) Y, the hollow fiber membranes can be shaken effectively by physical washing, and the turbid matter accumulated between the hollow fiber membranes can be easily discharged. Thereby, clogging between the hollow fiber membranes and in the membrane pores due to the turbid matter hardly occurs, which is preferable. The fact that X and Y have the above-described relationship means that the hollow fiber membrane has a predetermined amount of slack in the hollow fiber membrane module. Usually, when the hollow fiber membrane has slack, clogging is effectively eliminated by physical washing, and abrasion of the hollow fiber membrane is concerned; however, in a membrane module in which the outer surface of the hollow fiber membrane has a high surface elastic modulus, abrasion can be suppressed, and a high turbidity liquid is easily and stably filtered for a long period of time, which is preferable. $(X - Y)/Y \times 100\ (\%)$ representing the slack amount of the hollow fiber membrane is more preferably 4% or more, still more preferably 8% or more, particularly preferably 12% or more from the viewpoint of enhancing the effect of physical washing. From the viewpoint of uniformly controlling the filling rate of the hollow fiber membrane in the tubular case in an appropriate range, the slack amount of the hollow fiber membrane is more preferably 18% or less, still more preferably or less, particularly preferably 16% or less.

Hereinafter, the hollow fiber membrane which is one of constituent elements of the hollow fiber membrane module will be described.

<Structure of hollow fiber membrane>

Since the surface elastic modulus of the outer side of the hollow fiber membrane in contact with the raw solution containing a large amount of turbid matter is 200 MPa to 500 MPa, the hollow fiber membrane module of the present invention can suppress damage such as abrasion of the hollow fiber membrane and reduce a decrease in removal rate. Since the surface elastic modulus of the outer side of the hollow fiber membrane in contact with the raw solution containing a large amount of turbid matter is 200 MPa to 500 MPa, the hollow fiber membrane of the present invention can suppress damage such as abrasion of the hollow fiber membrane and reduce a decrease in removal rate. As a result, it is possible to stably maintain a high removal rate without reducing the removal rate due to damage such as abrasion. For this purpose, when the opening ratio of the outside surface of the hollow fiber membrane is in a relatively small range of 1 to 10%, the density of the outer side of the hollow fiber membrane is increased, and the surface elastic modulus is easily made relatively high, which is preferable. Since the opening ratio of the outside surface is relatively small, the turbid matter hardly enters the pores. Therefore, the turbid matter is less likely to collide in the vicinity of the pore inlet to cause abrasion that deforms the shape of the pores, which is preferable. In order to relatively increase the surface elastic modulus, the opening ratio is preferably 10% or less, more preferably 8% or less, still more preferably 6% or less, particularly preferably 4% or less. When the permeation resistance of the permeate is small, the turbid matter is less likely to be strongly pressed against the hollow fiber membrane outer surface and is less likely to be abraded. In order to reduce the permeation resistance, the opening ratio of the surface is preferably 1% or more, more preferably 2% or more, still more preferably 3% or more. The surface pore is a pore present in the plane when the outside surface of the hollow fiber membrane is observed, and the opening ratio is the ratio of the area of the pores in the plane on the surface.

In the case of determining the opening ratio of the hollow fiber membrane surface, an image obtained by observing the surface of the hollow fiber membrane with a scanning electron microscope (hereinafter referred to as "SEM") is binarized using free software "ImageJ". When binarization is performed, Create Background is performed with 1 pixel in Subtract Background, and then the condition: RenyiEntropy is selected in Threshold (threshold for binarization). In the obtained binarized image, the area of each pore is determined by selecting Area in Analyze Particles. A region where 1,000 or more pores can be counted is observed to determine the total area of pores, and the total area is divided by the area of the observed membrane to determine an opening ratio.

When the surface average pore diameter of the outer side of the hollow fiber membrane is in a relatively small range of 5 nm to 20 nm, the density of the outer side of the hollow fiber membrane is increased, and the surface elastic modulus is easily made relatively high, which is preferable. The surface average pore diameter is more preferably 5 nm to 10 nm. The surface average pore diameter is an average value of surface pore diameters described later. Since the surface average pore diameter of the outside surface is relatively small, the turbid matter hardly enters the pores. Therefore, the turbid matter is less likely to collide in the vicinity of the pore inlet to cause abrasion that deforms the shape of the pores, which is preferable. The surface pore diameter is the diameter of a pore present in the plane when the surface of the hollow fiber membrane is observed. When the surface pore diameter of the hollow fiber membrane is determined, the area of each pore is determined in the same manner as in the case of determining the opening ratio of the surface, and the diameter calculated assuming each pore as a circle is defined as the surface pore diameter. When the average value of the surface pore diameters is to be determined, the pore diameters of 1,000 or more pores are averaged.

In the sliced cross-section of the hollow fiber membrane, when the cross-sectional porosity in a region of 5 $\mu$m from the outer side of the hollow fiber membrane (hereinafter referred to as an outer surface part) is smaller than the cross-sectional porosity in a region of 5 $\mu$m from the inner side of the hollow fiber membrane (hereinafter referred to as an inner surface part), the density of the outer side of the hollow fiber membrane is increased, and the surface elastic modulus is easily made relatively high, which is preferable. Since the cross-sectional porosity of the inner surface part is large, the permeation resistance when the liquid to be filtered permeates the hollow fiber membrane is reduced, and the pressure when the turbid matter is pressed against the outer surface part is easily reduced. When the pressure at which the turbid matter is pressed is low, the outer surface part is less likely to be abraded, which is preferable. The sliced cross-section refers to a cross-section perpendicular to a longitudinal direction of the hollow fiber membrane. The cross-sectional porosity is calculated by observing a sliced cross-section of the hollow fiber membrane (the thickness of a section serving as an observation sample is 100 nm) with a transmission electron microscope (hereinafter referred to as "TEM") to obtain an image, and determining the ratio of the area of the pore portion to the observed area as a percentage.

The sliced cross-sectional sample for observation is obtained by collecting at a low temperature a slice with a thickness of 100 nm of the hollow fiber membrane embedded using a commercially available embedding agent for producing a frozen tissue section and using a freezing microtome, and performing vacuum drying at room temperature for 12 hours. At the time of observation with a TEM, information in the thickness direction of the section to be observed is reflected. Therefore, when a section serving as an observation sample is cut out with a microtome, it is important to perform evaluation while making the thickness uniform, and in the present invention, the section thickness of the microtome is set to 100 nm as a thickness that can be easily observed with favorable reproducibility. An image obtained by observing the cross-sectional sample for observation with a TEM is binarized using free software "ImageJ". When binarization is performed, the condition Triangle is selected in Threshold (threshold for binarization). In the obtained binarized image, the area of each pore is determined by selecting Area in Analyze Particles. A region where 100 or more pores can be counted is observed to determine the total area of fine pores, and the total area is divided by the area of the observed membrane to determine a cross-sectional porosity.

The surface elastic modulus is generally susceptible to a structure having a depth of 5 to 10 times the indentation depth. That is, in the physical washing (air washing) test described later, the surface elastic modulus at a depth of several hundred nm where abrasion is observed is easily affected by the cross-sectional structure of the outer surface part which is a depth region of 5 $\mu$m from the outer surface. When the cross-sectional porosity in the outer surface part of the hollow fiber membrane is 20% to 50%, the density of the outer surface part can be relatively easily increased, and the surface elastic modulus can be easily controlled within a suitable range, which is preferable. In order to easily increase the surface elastic modulus, the cross-sectional porosity is more preferably 45% or less, still more preferably 40% or less, particularly preferably 36% or less. In order to reduce the resistance of the permeate, the cross-sectional porosity is more preferably 25% or more, still more preferably 30% or more, particularly preferably 35% or more.

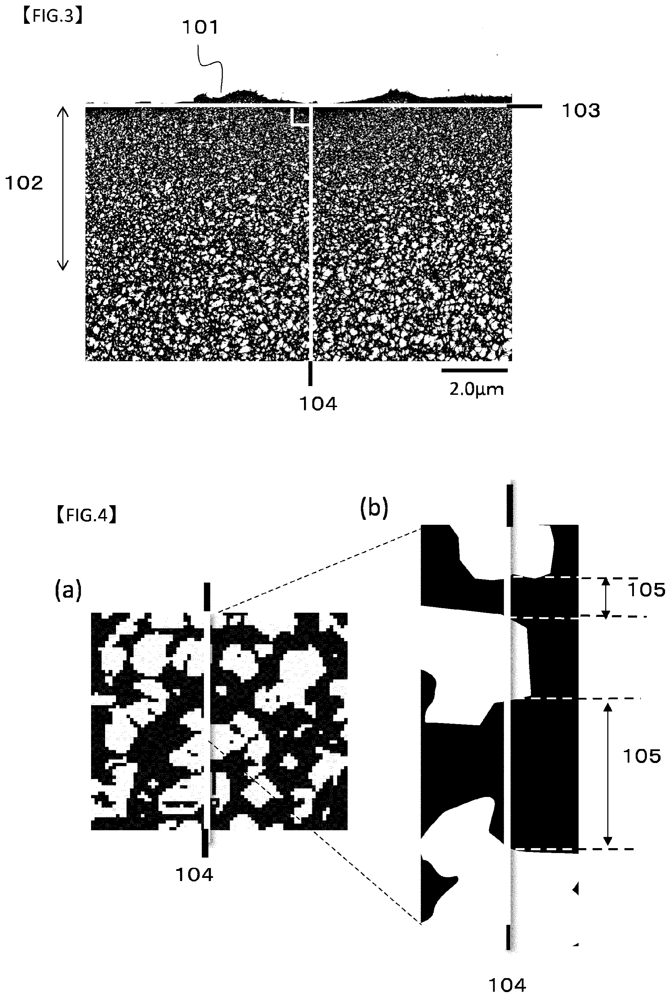

In the outer surface part, when hollow fiber membrane structures between pores constituting the hollow fiber membrane are used as columns, and the average value of thicknesses of the columns is 20 nm to 60 nm, the surface elastic modulus is easily controlled in an appropriate range, which is preferable. It is preferable because the permeation resistance of the permeate is easily reduced. Here, the column constituting the hollow fiber membrane refers to a constituent structure of the hollow fiber membrane present between the pores of the hollow fiber membrane. In order to make it easy for the columns to exert a restoring force against the force when the turbid matter or the like is pressed against the outer surface part, that is, to easily increase the surface elastic modulus, the average value of thicknesses of the columns is more preferably 25 nm or more, still more preferably 30 nm or more, particularly preferably 32 nm or more. In order not to excessively impart the resistance of the permeate by the columns, the average value of thicknesses of the columns is more preferably 55 nm or less, still more preferably 50 nm or less, particularly preferably 45 nm or less. As for the thickness of the column, when a line (line 104 in Figs. 3 and 4) perpendicular to a surface 101 (line 103 in Fig. 3) is drawn in an image obtained by observing the outer surface part, which is a region of 5 $\mu$m from an outer surface part 102 of the above-described sliced cross-section, with a TEM, the length in which the line 104 and a region (black part) between the pores is determined as the thickness of the column. The average value is calculated using column thicknesses 105 of 500 or more columns. Fig. 3 shows an image observed with a TEM, and Fig. 4 shows an enlarged view of a part thereof. The column thickness 105 corresponds to a line segment of a resin part indicated by black in the line 104. In Fig. 4(b), there are two columns, and the length of each line segment is the column thickness 105.

The density of the columns in the outer surface part is defined as the number of columns per unit length on the line 104, and is preferably 10 columns/$\mu$m to 50 columns/$\mu$m because the surface elastic modulus can be easily controlled in an appropriate range. It is presumed that this is because when the turbid matter or the like is pressed against the outer surface part, the pressing force due to the turbidity is easily dispersed due to the presence of the columns at a high density. In order to sufficiently disperse the compressive force due to the turbid matter and easily increase the surface elastic modulus, the density of the columns is more preferably 15 columns/$\mu$m or more, still more preferably 20 columns/um or more, particularly preferably 25 columns/$\mu$m or more. In order not to excessively impart the resistance of the permeate by the columns, the density of the columns is more preferably 45 columns/$\mu$m or less, still more preferably 40 columns/$\mu$m or less, particularly preferably 35 columns/$\mu$m or less. As for the density of the columns, when a line (line 104 in Figs. 3 and 4) perpendicular to a surface (line 103 in Fig. 3) is drawn in an image obtained by observing the outer surface part, which is a region of 5 $\mu$m from an outer surface of the above-described sliced cross-section, with a TEM, the number of columns on the line 104 is determined. The counted number of columns is divided by the length of the line to obtain the density of the columns. As for the density of the columns, the average value is calculated using the number of 500 or more columns. In the outer surface part, when the distribution of the density of the columns is small, the surface elastic modulus is easily increased, which is preferable. When the distribution of the density of the columns in the direction parallel to the surface is small, the coefficient of variation of the surface elastic modulus is easily reduced, which is preferable. In particular, when the distribution of the density of the columns in the depth direction from the surface is small, the surface elastic modulus is easily increased on average, which is preferable.

It is preferable that the distribution of the structure and the pore diameter is small in the depth direction from the surface because excellent removability is easily exhibited in order to obtain safe and secure water. As described above, since the surface elastic modulus is easily increased, abrasion is suppressed, and high removability is easily exhibited for a long period of time, which is preferable. In order to reduce the distribution of the structure in the depth direction from the surface, it is preferable that the membrane cross-section does not substantially include macrovoids. The macrovoids are pores having a major axis of 5 $\mu$m or more when a cross-section of the hollow fiber membrane is photographed at a magnification of 3,000 using a scanning electron microscope. When it is difficult to determine the major axis, a circle (equivalent circle) having an area equal to the area of the pore is obtained by the above-described binarization processing, and the equivalent circle diameter is defined as the major axis of the pore. In the cross-section of the hollow fiber membrane, 30 points different from each other were observed, when no macrovoids were present or only macrovoids having a major axis of less than 5 $\mu$m were present, it was determined that the hollow fiber membrane did not have macrovoids of 5 $\mu$m or more, and when at least one macrovoid having a major axis of 5 $\mu$m or more was observed, it was determined that the hollow fiber membrane had macrovoids of 5 $\mu$m or more.

Since the pure water permeability of the hollow fiber membrane is in a relatively low range of 0.1 to 0.6 m$^3$/m$^2$/h/50 kPa, the surface elastic modulus of the hollow fiber membrane outer surface is easily controlled in a relatively high range, which is preferable. In order to enhance the surface elastic modulus, the pure water permeability is preferably 0.6 m$^3$/m$^2$/h/50 kPa or less, more preferably 0.5 m$^3$/m$^2$/h/50 kPa or less, and still more preferably 0.4 m$^3$/m$^2$/h/50 kPa or less. In order to make it difficult for the turbid matter or the like to be strongly pressed against the hollow fiber membrane, the pure water permeability is preferably 0.1 m$^3$/m$^2$/h/50 kPa or more, more preferably 0.2 m$^3$/m$^2$/h/50 kPa or more, and still more preferably 0.3 m$^3$/m$^2$/h/50 kPa or more.

The hollow fiber membrane may be composed of one layer or a plurality of layers. Even when the hollow fiber membrane is composed of one layer, the outer surface part and the inner surface part can have different cross-sectional porosities or the like by changing the environment between the outer side and the inner side during membrane formation. For example, the composition of an injection solution discharged as the hollow part of the hollow fiber during membrane formation and a coagulation bath for coagulating the discharged hollow fiber may be changed. In the case of a composite hollow fiber membrane composed of a plurality of layers, the cross-sectional porosity of the outer surface part is preferably lower than the cross-sectional porosity of the inner surface part, so that the filtration resistance of the hollow fiber membrane can be reduced while the abrasion of the outer surface part is suppressed.

When the number of surface pores observed on the surface of the hollow fiber membrane is 200 pores/$\mu$m$^2$ to 2,000 pores/$\mu$m$^2$, contaminant components in the liquid to be filtered can be dispersed in the hollow fiber membrane, and filtration of highly turbid water can be easily and stably performed for a long period of time, which is preferable. The number of surface pores of the hollow fiber membrane is the number of pores present in the plane when the surface of the hollow fiber membrane is observed. Even if the contaminant components in the liquid to be filtered have partially clogged the surface pores as the filtration progresses, when the number of surface pores is large, the number of channels through which the liquid to be filtered permeates the hollow fiber membrane is likely to be sufficiently secured, which is preferable.

When the number of surface pores is 200 pores/$\mu$m$^2$ or more, it is easy to sufficiently secure channels until cleaning such as backpressure washing is performed even in the case of a contaminative liquid to be filtered. The number of surface pores of the hollow fiber membrane is more preferably 290 pores/$\mu$m$^2$ to 1,500 pores/$\mu$m$^2$, particularly preferably 350 pores/$\mu$m$^2$ to 1,000 pores/$\mu$m$^2$.

When a value $\alpha$ obtained by dividing the number [pores/$\mu$m$^2$] of pores observed in the outer surface of the hollow fiber membrane (hereinafter referred to as surface pores) per unit area by the average value of the surface pore diameter [nm] is 30 pores/$\mu$m$^2$/nm to 150 pores/$\mu$m$^2$/nm, while contamination components and an object to be removed in a liquid to be filtered can be prevented from entering the hollow fiber membrane, the number of channels through which the liquid to be filtered permeates the hollow fiber membrane can be sufficiently secured, so that clogging is easily suppressed, which is preferable. Thereby, it is easy to filter the high turbidity raw solution for a long period of time and to obtain permeate water having safe and secure water quality. A large value $\alpha$ means that there are many small pores. Usually, when the pore diameter is small, the proportion of the polymer constituting the hollow fiber membrane tends to increase so as to fill the pores of the hollow fiber membrane, and therefore the number of pores tends to decrease. As a result, the surface pore number decreases as the surface pore diameter decreases, and there is a trade-off relationship between the surface pore diameter and the surface pore number.

Since the hollow fiber membrane of the present invention has small pores to prevent coarse contaminant components and objects to be removed in the liquid to be filtered from entering the hollow fiber membrane and the large number of pores sufficiently secures the number of channels through which the liquid to be filtered permeates the hollow fiber membrane and allows for dispersion of contaminant components, clogging is easily suppressed. Since the surface pores are small, the surface elastic modulus is easily increased, and since the surface pores are large, the pressure at which the turbid matter comes into contact with the membrane surface is easily reduced. That is, from the viewpoint of contamination resistance and abrasion resistance, it is preferable to achieve both a small surface pore diameter and a large surface pore number. Since the surface pore number and the surface pore diameter satisfy a positive correlation in which both become better, and both of them contribute to contamination resistance, it is preferable to use the value $\alpha$ in consideration of both as indices of contamination resistance. In addition, since the surface pore number is negatively correlated to the surface pore diameter, it is preferable to use the value $\alpha$ divided by the surface pore diameter as the index rather than using only the surface pore number as the index. Such a porous membrane having a large number of surface pores and a small surface pore diameter has not been obtained in conventional techniques.

As will be described later, in the porous membrane of the present invention, the progress of excessive phase separation and coarsening is suppressed by making the self-diffusion coefficient of the polymer relatively small, that is, by making the polymer hardly move, in the process of forming the porous membrane, and the porous membrane is coagulated in a state in which fine pores exist in a large amount, so that it is easy to break the trade-off between the pore diameter and the number of pores. The value $\alpha$ is preferably 30 to 150 pores/$\mu$m$^2$/nm, which is higher than in the normal trade-off relationship, because excellent contamination resistance is exhibited, and the value $\alpha$ is more preferably 30 to 100 pores/$\mu$m$^2$/nm, still more preferably 32 to 80 pores/$\mu$m$^2$/nm, particularly preferably 50 to 70 pores/$\mu$m$^2$/nm.

<Material of hollow fiber membrane>

In order to efficiently discharge the turbid matter or the like from the hollow fiber membrane module by physical washing, the hollow fiber membrane is preferably a flexible material, and preferably contains a polymer as a main component. The type of the polymer is not particularly limited, and specific examples thereof include a polysulfone-based resin, a polyethersulfone-based resin, a polyvinylidene fluoride-based resin, nylon, a cellulose ester such as cellulose acetate and cellulose acetate propionate, a fatty acid vinyl ester, polyvinyl alcohol, polyvinyl acetate, polyvinyl pyrrolidone, ethylene oxide, propylene oxide, a polymer of an acrylic acid ester or a methacrylic acid ester such as polymethyl methacrylate, and a copolymer thereof.

In particular, in order to use the hollow fiber membrane for filtration for a long period of time, it is preferable to periodically perform chemical washing of accumulated contaminant components, and it is particularly preferable to contain a polyvinylidene fluoride-based resin having excellent chemical resistance. The polyvinylidene fluoride-based resin refers to a homopolymer of vinylidene fluoride or a copolymer of vinylidene fluoride. Here, the copolymer of vinylidene fluoride refers to a polymer having a vinylidene fluoride residue structure. The polymer having a vinylidene fluoride residue structure is typically a copolymer of a vinylidene fluoride monomer and another fluorine-based monomer or the like. Examples of such a fluorine-based monomer include vinyl fluoride, tetrafluoroethylene, hexafluoropropylene, and chlorotrifluoroethylene. The above vinylidene fluoride copolymer may be copolymerized with ethylene or the like other than the fluorine-based monomer to such an extent that the effect of the present invention is not impaired.

The polyvinylidene fluoride-based resin is more preferably contained in an amount of 50 wt% or more, particularly preferably contained in an amount of 60 wt% or more when the weight of the hollow fiber membrane is 100%. When the weight-average molecular weight of the polymer is 50,000 to 1,000,000 Da, the above-described surface elastic modulus is easily controlled in a suitable range, which is preferable.

When the thickness of the hollow fiber membrane is 150 $\mu$m or more, the surface elastic modulus is easily increased, and variation in surface elastic modulus is easily reduced, which is preferable. The thickness of the hollow fiber membrane is more preferably 170 $\mu$m or more, still more preferably 200 $\mu$m or more. When the thickness of the hollow fiber membrane is 350 $\mu$m or less, the surface area of the hollow fiber membrane outer surface in the tubular module is easily increased, that is, the amount of the to-be-filtered liquid per membrane area is easily reduced, which is preferable. By reducing the amount of the to-be-filtered liquid per membrane area, abrasion is easily suppressed. The thickness of the hollow fiber membrane is more preferably 300 $\mu$m or less, still more preferably 250 $\mu$m or less. The thickness of the hollow fiber membrane corresponds to half of the value obtained by subtracting the inner diameter from the outer diameter of the hollow fiber membrane.

<Method for manufacturing hollow fiber membrane>

The hollow fiber membrane used in the hollow fiber membrane module of the present invention is preferably obtained by a manufacturing method including: a step (A): a step of dissolving a polymer in a solvent to provide a polymer solution; and a step (B): an outer surface part forming step of then coagulating the polymer solution in a non-solvent to form an outer surface part of a hollow fiber membrane, in which a self-diffusion coefficient [m$^2$/sec] of the polymer dissolved in the polymer solution obtained in the step (A) is $0.8 \times 10^{-11}$ m$^2$/sec to $1.6 \times 10^{-11}$ m$^2$/sec, the self-diffusion coefficient being calculated by all-atom molecular dynamics calculation, the non-solvent used in the step (B) contains 90 to 100 wt% of water, and the temperature of the non-solvent is 6°C to 45°C.

The type of the polymer used in the step (A) is not particularly limited, but as a specific example, the resins listed in <Material of hollow fiber membrane> described above are preferably used. When the weight-average molecular weight of the polymer is 50,000 to 1,000,000 Da, the later-described self-diffusion coefficient is easily controlled within a relatively slow and suitable range, which is preferable. In addition, a plurality of polymers may be mixed and used. The solvent preferably contains a good solvent. Here, the "good solvent" refers to a solvent capable of dissolving 5 wt% or more of a polymer even in a low temperature range of 60°C or less. Examples of the good solvent include N-methyl-2-pyrrolidone (hereinafter referred to as "NMP"), 2-pyrrolidone (hereinafter referred to as "2P"), $\varepsilon$-caprolactam (hereinafter referred to as "$\varepsilon$-CL"), dimethylacetamide, dimethylformamide, methyl ethyl ketone, acetone, tetrahydrofuran, tetramethylurea, trimethyl phosphate, and mixed solvents thereof. The good solvent is more preferably contained in the solvent in an amount of 40 wt% or more, particularly preferably contained in an amount of 60 wt% or more. When a large amount of the good solvent is contained, a polymer chain is expanded in the polymer solution, and the self-diffusion coefficient described later is easily controlled within a relatively slow and suitable range, which is preferable

Here, the "non-solvent" in the step (B) refers to a solvent that does not dissolve or swell a polymer even when the non-solvent is heated to a high temperature up to a boiling point. Examples of the non-solvent include water, hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, an aliphatic hydrocarbon such as polyethylene glycol having a low molecular weight, an aromatic hydrocarbon, an aliphatic polyhydric alcohol, an aromatic polyhydric alcohol, a chlorinated hydrocarbon, other chlorinated organic liquids, and mixed solvents thereof. The concentration (wt%) of the polymer in the polymer solution is preferably equal to or higher than the entanglement concentration in order to control the self-diffusion coefficient within a suitable range, and more specifically, it is preferably 10 to 40 wt%, further preferably 12 to 30 wt%, particularly preferably 15 to 25 wt%. It has been found that when the concentration of the polymer is 10 wt% or more, the self-diffusion coefficient can be made relatively slow, and the coagulation can be performed in a state in which a large amount of fine pores on the outer surface part of the hollow fiber membrane are present. The polymer concentration is more preferably 12 wt% or more, particularly preferably 15 wt% or more. When the concentration of the polymer is 40 wt% or less, the proportion of the polymer in the outer surface part can be reduced, and a sufficient number of pores can be secured. The polymer concentration is more preferably 30 wt% or less, particularly preferably 25 wt% or less.

The outer surface part forming step of the step (B) of coagulating the polymer solution in a non-solvent to form a porous membrane is a step of forming a porous membrane by what is called non-solvent-induced phase separation. When the polymer solution comes into contact with the non-solvent, the polymer cannot be completely dissolved in the solvent, phase separation occurs into a polymer-rich phase and a solvent-rich phase, and each phase coarsens while coalescing with the same phase in the surroundings.

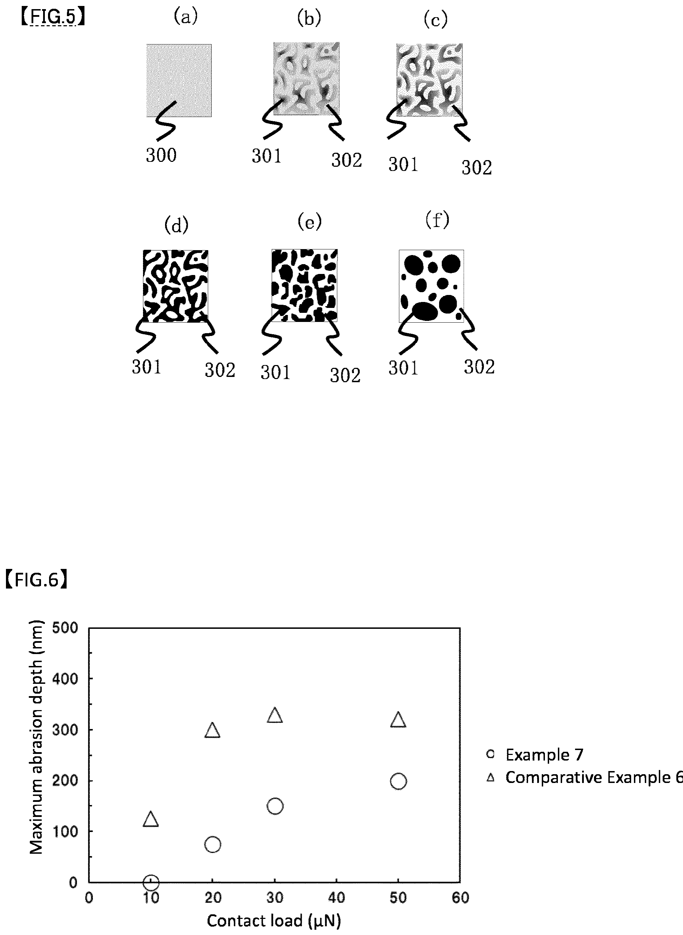

Fig. 5 schematically shows a process of forming the porous membrane in the step (B). In the order of Figs. 5(a) to 5(f), phase separation proceeds in the polymer solution, and a portion (polymer-rich phase 301) having a high polymer concentration coarsens. In this phase separation and/or coarsening process, exchange between the solvent and the non-solvent proceeds, and when the concentration of the non-solvent exceeds a certain level, the polymer is solidified, and the structure of the porous membrane is immobilized. At this time, a solvent-rich phase 302 becomes pores of the porous membrane.

In the manufacture of the hollow fiber membrane used in the hollow fiber membrane module of the present invention, by setting the self-diffusion coefficient of the polymer to a relatively low range of $0.8 \times 10^{-11}$ m$^2$/sec to $1.6 \times 10^{-11}$ m$^2$/sec, the progress of excessive phase separation and coarsening is suppressed, coagulation is easily performed in a state where the polymer-rich phase 301 and the solvent-rich phase 302 are respectively present finely and in a large amount, and a large amount of fine pores can be formed. When the self-diffusion coefficient is $0.8 \times 10^{-11}$ m$^2$/sec or more, the polymer has a diffusion coefficient sufficient for phase separation from the solvent, and pores are easily formed. When diffusion of the polymer is so slow that phase separation is difficult, pores are hardly formed. When the self-diffusion coefficient is $1.6 \times 10^{-11}$ m$^2$/sec or less, it is easy to form many micropores by suppressing the progress of excessive phase separation and coarsening and suppressing the coalescence of the pores. That is, by appropriately controlling the self-diffusion coefficient of the polymer in a relatively low range, a porous membrane having many micropores can be formed. The self-diffusion coefficient is more preferably $0.8 \times 10^{-11}$ m$^2$/sec to $1.4 \times 10^{-11}$ m$^2$/sec, still more preferably $0.8 \times 10^{-11}$ m$^2$/sec to $1.1 \times 10^{-11}$ m$^2$/sec.

The self-diffusion coefficient is determined by, for example, a method of determining the self-diffusion coefficient by all-atom molecular dynamics calculation. The all-atom molecular dynamics calculation is a method of obtaining a trajectory of each atom by solving the equation of motion of a molecular population system for every constituent atom. First, a polymer solution system is produced so as to have a polymer concentration (wt%) to be actually used. At this time, one model polymer chain is modeled so as to have a molecular weight of 800 to 6,000 that is 1/200 to 1/5 of the weight-average molecular weight of a polymer actually used. As the potential parameter used in the molecular dynamics calculation, known parameters such as those disclosed in DREIDING [S. L. Mayo, B. D. Olafson, W. A. Goddard III, J. Phys. Chem. 94, 8897 (1990).], GAFF [J. Wang, R. M. Wolf, J. W. Caldwell, P. A. Kollman, D. A. Case, J. Comput. Chem. 25, 1157 (2004)], OPLS-AA [W. L. Jorgensen, D. S. Maxwell, Julian Tirado-Rives, J. Am. Chem. Soc. 118, 11225 (1996)], and CHARMM [B. R. Brooks, R. E. Bruccoleri, B. D. Olafson, D. J. States, S. Swaminathan, M. Karplus, J. Comput. Chem. 4, 187 (1983)] can be used, but a parameter that reproduces the density or cohesive energy, which is a physical quantity representing an aggregation state of a solution system, is preferable.

As a result of examining the reproducibility of the aggregation state by the inventors, it has been found that it is particularly preferable to use GAFF or OPLS-AA. Further, an isothermal-isobaric ensemble is configured by controlling the temperature to 25°C by the Nose-Hoover method [Hoover, W. G. Phys. Rev. A, 31, 1695 (1985).] and the pressure to 1 bar by the Andersen method [H. C. Andersen, J. Chem. Phys. 72, 2384 (1980)]. At this time, the short-ranged Lennard-Johns interaction is handled by applying a switch function from 1.0 nm to the cutoff 1.2 nm, and the long-range electrostatic interaction is calculated by the Particle Mesh Ewald method. Molecular dynamics calculation is performed with the isothermal-isobaric ensemble until the density becomes constant, then the unit cell length is adjusted so as to have an average density, and additional calculation of 11 ns is performed with an isothermal ensemble. Using the trajectory for 10 ns, the mean square displacement (MSD) of each atom of the polymer is obtained, and the self-diffusion coefficient of the polymer is calculated from the following Formula (1). At this time, it is confirmed that the value obtained by dividing log (MSD) by log (t) is in the range of 0.9 to 1.1 for the ranges of MSD and t used for the calculation of D. When a plurality of types of polymers are mixed to form a polymer solution, a value obtained by determining the weighted average of the self-diffusion coefficients of respective polymers based on the percentages by weight of the polymers is defined as the self-diffusion coefficient of the polymers in the polymer solution.

$$D = MSD/6t \cdots \cdots Formula\ (1)$$

D: Self-diffusion coefficientt: Time

When the non-solvent used for coagulation contains 90 to 100 wt% of water in the manufacture of the hollow fiber membrane used in the hollow fiber membrane module of the present invention, coagulation is fast, and the self-diffusion coefficient in the polymer solution tends to affect the rate of phase separation and coarsening. That is, it is easy to obtain the effect of controlling the self-diffusion coefficient in the polymer solution to a relatively low range. In addition, when the temperature of the non-solvent is 6°C to 45°C, coagulation is fast, and the self-diffusion coefficient in the polymer solution tends to affect the rate of phase separation and coarsening. The temperature of the non-solvent is more preferably 10°C to 35°C, still more preferably 15°C to 30°C.

With regard to the manufacture of the hollow fiber membrane used in the hollow fiber membrane module of the present invention, in the step (A) described above, the solvent preferably contains a hydrogen bonding solvent having a hydrogen bond donor property and a hydrogen bond acceptor property and having a molecular weight of 500 Da or less, and the self-diffusion coefficient of the polymer is easily controlled within an appropriate range. Having a hydrogen bond donor property means having a positively polarized hydrogen atom, and specifically, having a hydroxy group (OH group), a carboxy group (COOH group), an amino group (NH group), or the like. Having a hydrogen bond acceptor property means having a lone electron pair, specifically, having a carbonyl group, an alkoxy group, a cyano group, or the like. When the solvent has a hydrogen bond donor property and a hydrogen bond acceptor property, interaction due to hydrogen bonding between the solvent and the solvent is strong, movement of the solvated polymer is suppressed, and the self-diffusion coefficient of the polymer is easily controlled to a relatively slow and suitable range. The solvent having a hydrogen bond donor property and a hydrogen bond acceptor property is not particularly limited, and specific examples thereof include 2P, ε-CL, 1,3-dimethylurea, N-methylacetamide, hydantoin, 2-imidazolidinone, and DL-pyroglutamic acid.

In the step (A) described above, the polymer to be dissolved contains a polymer having a hydrogen bond donor property and/or a hydrogen bond acceptor property, so that the self-diffusion coefficient of the polymer is easily controlled within an appropriate range, which is preferable. This is because when the polymer has a hydrogen bond donor property and/or a hydrogen bond acceptor property, the polymer interacts with a solvent having a hydrogen bond donor property and a hydrogen bond acceptor property by hydrogen bonding, and the self-diffusion coefficient of the polymer is easily controlled to a relatively slow and suitable range. The polymer having a hydrogen bond donor property and/or a hydrogen bond acceptor property is more preferably contained in an amount of 10 wt% to 50 wt% in the porous membrane from the viewpoint of controlling the self-diffusion coefficient of the polymer within an appropriate range.

<Filtration operation method>

The hollow fiber membrane module of the present invention is preferably a filtration operation method for supplying a liquid having a turbidity of 3 to 50 NTU to the hollow fiber membrane module. This is because it is possible to stably and efficiently treat a high turbidity liquid which is easily abraded by a hollow fiber membrane module which is hardly abraded. When a high turbidity liquid is treated with a membrane module, pretreatment is often performed at a front stage of the membrane module in order to reduce turbidity. By supplying a liquid having a relatively high turbidity of 3 to 50 NTU as a liquid to be filtered to the membrane module, it is easy to reduce the load of pretreatment and to improve the efficiency of the liquid treatment process. Here, the pretreatment refers to steps such as flocculation precipitation, pressure flotation, and centrifugation. In order to improve the efficiency of the entire liquid treatment process, the turbidity of the liquid to be supplied to the hollow fiber membrane module is more preferably 5 or more, still more preferably 10 or more, particularly preferably 20 or more. In order not to excessively increase the flow resistance of the liquid in the hollow fiber membrane module, the turbidity of the liquid to be supplied to the hollow fiber membrane module is more preferably 45 or less, still more preferably 40 or less, particularly preferably 30 or less. The turbidity of the to-be-filtered liquid to be supplied to the hollow fiber membrane module can be controlled by the work amount of the pretreatment and the addition amount of a flocculant or the like.

By adding an adsorbent such as activated carbon to the to-be-filtered liquid to be supplied to the hollow fiber membrane module, the removal rate can be easily increased. Meanwhile, activated carbon has higher hardness than general turbid matter such as kaolin, and easily causes abrasion of the hollow fiber membrane. Therefore, conventionally, it is necessary to adjust the addition amount in a range in which abrasion does not occur. It is preferable that a to-be-filtered liquid added with activated carbon is supplied to a hollow fiber membrane module using a hollow fiber membrane having a high surface elastic modulus of the present application and filtered, so that a high removal rate is easily exhibited stably.

In the filtration operation method in which a liquid having a TOC of 4 to 30 mg/L is supplied to the hollow fiber membrane module of the present invention, it is easy to stably and efficiently treat a high turbidity liquid, which is likely to be abraded, by the hollow fiber membrane module which is less likely to be abraded, which is preferable. When a high turbidity liquid is treated with a membrane module, pretreatment is often performed at a front stage of the membrane module in order to reduce TOC. By supplying a liquid having a relatively high TOC of 4 to 30 mg/L as a liquid to be filtered to the membrane module, it is easy to reduce the load of pretreatment and to improve the efficiency of the liquid treatment process. In order to improve the efficiency of the entire liquid treatment process, the TOC of the liquid to be supplied to the hollow fiber membrane module is more preferably 6 or more, still more preferably 8 or more, particularly preferably 10 or more. In order not to excessively increase the flow resistance of the liquid in the hollow fiber membrane module, the TOC of the liquid to be supplied to the hollow fiber membrane module is more preferably 25 or less, still more preferably 20 or less, particularly preferably 15 or less. The TOC of the to-be-filtered liquid to be supplied to the hollow fiber membrane module can be controlled by the work amount of the pretreatment and the addition amount of a flocculant or the like.

The liquid to be filtered supplied to the hollow fiber membrane module is concentrated in the hollow fiber membrane module as the filtration proceeds. When the turbidity in the hollow fiber membrane module increases to some extent, the turbid matter in the hollow fiber membrane module is discharged together with the physical washing, and the liquid to be filtered is supplied to the hollow fiber membrane module again. Such an operation of repeating filtration and physical washing is preferable in order to continue filtration for a long period of time. In order to improve the efficiency of treatment process of the liquid, the maximum turbidity in the hollow fiber membrane module is preferably controlled to be 10 to 100 NTU. By controlling the maximum turbidity to 10 NTU or more, the filtration duration time until physical washing can be lengthened, and the filtration efficiency can be easily improved. The maximum turbidity is preferably 10 or more, more preferably 15 or more, particularly preferably 20 or more. From the viewpoint of suppressing abrasion and clogging of the hollow fiber membrane module, the maximum turbidity is preferably 90 or less, more preferably 80 or less, particularly preferably 70 or less. The maximum turbidity can be controlled by the frequency of physical washing.

When the TOC in the hollow fiber membrane module also increases to some extent as the filtration proceeds, the TOC in the hollow fiber membrane module is discharged together with the physical washing, and the liquid to be filtered is supplied to the hollow fiber membrane module again. Such an operation of repeating filtration and physical washing is preferable in order to continue filtration for a long period of time. In order to improve the efficiency of treatment process of the liquid, the maximum TOC in the hollow fiber membrane module is preferably controlled to be 15 to 50 mg/L. By controlling the maximum TOC to 15 mg/L or more, the filtration duration time until physical washing can be lengthened, and the filtration efficiency can be easily improved. The maximum TOC is preferably 15 or more, more preferably 20 or more, particularly preferably 25 or more. From the viewpoint of suppressing abrasion and clogging of the hollow fiber membrane module, the maximum TOC is preferably 50 or less, more preferably 45 or less, particularly preferably 40 or less. The maximum TOC can be controlled by the frequency of physical washing.

It is preferable to perform physical washing by periodically stopping filtration so that turbidity and TOC in the hollow fiber membrane module do not become too high. In particular, the method preferably includes (1) a membrane separation step of supplying a raw solution to a hollow fiber membrane module and separating a suspended substance and a liquid, and (2) a washing step of stopping the membrane separation step and washing the suspended substance accumulated on an outer surface of a hollow fiber membrane or between hollow fiber membranes. In the washing method, it is preferable to perform an air-washing operation of causing a mixed flow of the raw solution or a liquid having at least a turbidity or TOC equal to or less than the turbidity or TOC of the raw solution and a gas at a flow rate of 0.3 m/s or more and 5.0 m/s or less at a membrane surface linear velocity on the outer surface side of the hollow fiber membrane because the inside of the hollow fiber membrane module can be effectively washed. Here, the linear velocity is a value obtained by dividing the flow rate of the liquid to be filtered in the direction perpendicular to the filtration direction (that is, the direction from the outer surface to the inner surface of the hollow fiber membrane) by the cross-sectional area of the channel of the flow. In the washing method, it is preferable to perform a backwashing operation of causing a liquid from the inner surface side of the hollow fiber membrane to the outer surface side of the hollow fiber membrane simultaneously with the air-washing operation because the washing efficiency can be further enhanced.

By using the hollow fiber membrane module of the present invention, abrasion of the membrane can be suppressed, and filtration operation is preferably performed so that the virus removal rate is 4 log (99.99%) or more, because a permeate with safe and secure water quality can be easily obtained. In order to increase the virus removal rate, for example, it is preferable to relatively increase the turbidity of the liquid of the hollow fiber membrane module to 3 to 50 NTU because viruses are adsorbed to the turbid matter to easily improve the removal rate. That is, in the hollow fiber membrane module of the present invention, a to-be-filtered liquid having a turbidity of 3 to 50 NTU is filtered, and the virus removal rate of a permeate separated from the to-be-filtered liquid is 4 log or more, and a high removal rate is obtained even with a high turbidity liquid, which is preferable. It is preferable to relatively increase the TOC of the liquid of the hollow fiber membrane module to 4 to 30 mg/L because viruses are adsorbed to the organic matter to easily improve the removal rate. It is also preferable that the maximum turbidity in the hollow fiber membrane module is 10 to 100 NTU because viruses are adsorbed to the turbid matter to easily improve the removal rate. It is also preferable that the maximum TOC in the hollow fiber membrane module is 15 to 50 mg/L because viruses are adsorbed to the organic matter to easily improve the removal rate.

Unlike the conventional hollow fiber membrane module, by using a hollow fiber membrane having a high surface elastic modulus, it is easy to operate for a long period of time in a range in which the turbid matter and TOC are high, the virus removal rate is easily increased, and the safety of the permeate water quality is easily increased. In a liquid treatment process including a pretreatment step such as flocculation precipitation at the front stage of the membrane module, the virus removal rate is easily improved by increasing the addition amount of the flocculant in the pretreatment. As a method of increasing the virus removal rate in the membrane module without adding a flocculant, it is also possible to increase the specific filtration resistance of the microfiltration membrane or the ultrafiltration membrane. This is a method of increasing the virus removal rate by intentionally clogging the microfiltration membrane or the ultrafiltration membrane. The specific filtration resistance is expressed by Formula (2).

$$R_m = (TMP - TMP_0)/(\mu \times J) \quad \cdots\cdots \text{Formula (2)}$$

Here, $R_m$: specific filtration resistance [1/m], TMP: transmembrane pressure difference [Pa] during operation, $TMP_0$: initial transmembrane pressure difference [Pa], $\mu$: viscosity coefficient of water [Pa·s], J: membrane filtration flux [m/s]. Examples of the method of clogging a microfiltration membrane or an ultrafiltration membrane to increase a specific filtration resistance include increasing the membrane filtration flux, increasing the filtration time (reducing the frequency of physical washing), reducing the flow rate and time per physical washing, reducing the frequency of chemical solution backflow washing, and reducing the flow rate and time per chemical solution backflow washing. By increasing the virus removal rate by such a method, it is not necessary to add a flocculant, so that the drug cost is easily reduced. The virus removal rate is preferably 4 log or more, more preferably 5 log or more, particularly preferably 6 log or more.

By using the hollow fiber membrane module of the present invention, abrasion of the membrane can be suppressed, and the silt density index (SDI) of the permeate of the hollow fiber membrane module is controlled to be 3 or less, so that a permeate with safe and secure water quality can be easily obtained, which is preferable. That is, in the hollow fiber membrane module of the present invention, a to-be-filtered liquid having a turbidity of 3 to 50 NTU is filtered, and the SDI of the separated permeate is 3 or less, and a high SDI reduction rate is obtained even with a high turbidity liquid, which is preferable. In order to reduce the SDI of the permeate, for example, it is preferable to relatively increase the turbidity of the liquid in the hollow fiber membrane module to 3 to 50 NTU because silt is adsorbed to the turbid matter to easily improve the removal rate, that is, the SDI of the permeate is easily reduced. It is preferable that the TOC of the liquid in the hollow fiber membrane module is relatively increased to 15 to 50 mg/L because silt is adsorbed to the organic matter to easily improve the removal rate, that is, the SDI of the permeate is easily reduced. It is also preferable that the maximum turbidity in the hollow fiber membrane module is 10 to 100 NTU because silt is adsorbed to the turbid matter to easily improve the removal rate, that is, the SDI of the permeate is easily reduced. It is also preferable that the maximum TOC in the hollow fiber membrane module is 15 to 50 mg/L because silt is adsorbed to the organic matter to easily improve the removal rate, that is, the SDI of the permeate is easily reduced. Unlike the conventional hollow fiber membrane module, by using a hollow fiber membrane having a high surface elastic modulus, it is easy to operate for a long period of time in a range in which the turbid matter and TOC are high, the silt removal rate is easily increased, and the water quality of the permeate water is easily increased.

In a liquid treatment process including a pretreatment step such as flocculation precipitation at the front stage of the membrane module, the SDI of the membrane module permeate is also easily reduced by increasing the addition amount of the flocculant in the pretreatment. As a method of reducing the SDI in the membrane module without adding a flocculant, it is also possible to increase the specific filtration resistance of the microfiltration membrane or the ultrafiltration membrane. This is a method of increasing the removal rate of silt by intentionally clogging the microfiltration membrane or the ultrafiltration membrane. Examples of the method of clogging a microfiltration membrane or an ultrafiltration membrane to increase a specific filtration resistance include increasing the membrane filtration flux, increasing the filtration time (reducing the frequency of physical washing), reducing the flow rate and time per physical washing, reducing the frequency of chemical solution backflow washing, and reducing the flow rate and time per chemical solution backflow washing. By reducing the SDI of the permeate by such a method, it is not necessary to add a flocculant, so that the drug cost is easily reduced. The SDI of the permeate is preferably 3 or less, more preferably 2 or less, particularly preferably 1 or less.

The SDI can be measured by the method described in ASTM D4189-95 (2002): Standard Test Method for Silt Density Index (SDI) of Water. The SDI value, which is also referred to as an FI value, refers to a fine concentration of turbid matter in target water, and is a value represented by $(1 - T0/T15) \times 100/15$, from time T0 required for obtaining 500 ml of filtered water from the start of filtration by subjecting target water to pressure-filtration at 0.2 MPa with a 0.45 $\mu$m filter, and time T15 required for obtaining 500 ml of filtered water from the time point at which filtration is continued for 15 minutes after the filtration under the same conditions. The SDI value is 0 when there is no turbid matter, and is 6.67 when there is the dirtiest water.

<Filtration apparatus>

The filtration apparatus is preferably a filtration apparatus capable of performing a filtration operation using the above-described hollow fiber membrane module. Specifically, the turbidity and TOC are assumed to fall within the above appropriate ranges, and selection of a pump and a pipe specification that can increase the specific filtration resistance, selection of a membrane module pretreatment step, and the like can be mentioned.

EXAMPLES

Hereinafter, the present invention will be described specifically with reference to examples, but the present invention is not limited to these examples at all. The measurement methods and evaluation methods are described below.

(i) Measurement of surface elastic modulus

A Berkovich indenter made of diamond was mounted on Nano Indenter SA2 manufactured by KLM, and a compression load application-unloading test was performed at room temperature in the air by the method in accordance with ISO14577. The dried hollow fiber membrane was cut into a length of about 1 cm, fixed on a metal plate of 1 cm square with a double-sided tape, and used for measurement. When measurement was performed at room temperature in the air with a maximum load of 0.1 mN, an application time of 15 seconds, and a maximum load holding time of 30 seconds, and a hollow fiber membrane containing a polyvinylidene fluoride-based resin as a main component was measured, the surface elastic modulus was calculated with a Poisson's ratio of 0.35. When N = 5, different positions were pushed, and the surface elastic modulus was calculated in the range of the pushing depth of 0.4 $\mu$m to 0.8 $\mu$m. The same measurement was performed using three different hollow fiber membranes, and the average value of all the measured values was taken as the measurement result of the surface elastic modulus.

(ii) Cross-sectional structure of surface part (cross-sectional porosity and average value of thicknesses and density of columns)

A hollow fiber membrane embedded using a commercially available embedding agent for producing a frozen tissue section (manufactured by Tissue-Tek; O.C.T. Compound) was cut to collect a slice with a thickness of 100 nm in a direction perpendicular to the surface of the hollow fiber membrane at -40°C using a cryo-ultramicrotome (manufactured by Leica; FC7), and the slice was vacuum-dried at room temperature for 12 hours. The cross-section of the outermost surface part of the hollow fiber membrane was observed with a TEM (manufactured by JEOL Ltd.; JEM-1400Plus) to obtain an image, and the image was binarized using free software "ImageJ". When binarization was performed, the condition Triangle was selected in Threshold (threshold for binarization). In the obtained binarized image, the area of each cross-sectional pore was determined by selecting Area in Analyze Particles. A region where 100 or more pores can be counted was observed to determine the total area of fine pores, and the total area was divided by the area of the observed membrane to determine a cross-sectional porosity.

When a line perpendicular to the surface was drawn in an image obtained by observing the above-described sliced cross-section with a TEM, the thickness of the column is determined as the length of the line overlapping a region between the pores. The average value was calculated using column thicknesses of 100 or more columns. When a line perpendicular to the surface was drawn in an image obtained by observing the above-described sliced cross-section with a TEM, the density of the columns was calculated by dividing the number of lines overlapping a region between the pores by the length of the line.

(iii) Surface structure of surface part (pore diameter and number of pores)

The hollow fiber membrane was vacuum-dried at 25°C for 12 hours and then observed with a SEM (manufactured by Hitachi High-Technologies Corporation; S-5500) at 30,000 to 100,000 fold magnification. An image obtained by observing the surface of the hollow fiber membrane with a SEM was binarized using free software "ImageJ". When binarization was performed, Create Background was performed with 1 pixel in Subtract Background, and then the condition: RenyiEntropy was selected in Threshold (threshold for binarization). In the obtained binarized image, the number of surface pores and the area of each surface pore were determined by selecting Area in Analyze Particles, and the diameter calculated assuming each surface pore as a circle was defined as the surface pore diameter. When the average value of the surface pore diameters was to be determined, the surface pore diameters of 1,000 or more pores were averaged.

(iv) Turbidity

The turbidity of the liquid to be filtered was measured at N = 5 using a portable turbidimeter 2100Q manufactured by HACH, and an average value thereof was used.

(v) TOC

The TOC of the liquid to be filtered was measured using TOC-V CSH/ASI-V/TNM-1 manufactured by SHIMADZU CORPORATION.

(vi) Wear test

The dried hollow fiber membrane was cut into a length of about 1 cm, fixed on a metal plate of 1 cm square with a double-sided tape. The measurement was performed in air at room temperature by mounting a Berkovich indenter to Triboindenter TI950 manufactured by Hysitron. Abrasion was performed by scanning a 5 $\mu$m square region with an indenter at a scanning speed of 20 $\mu$m/s with a predetermined contact load as shown in Fig. 2. Thereafter, a 20 $\mu$m square region including a non-worn region and a worn region was scanned with a contact load of 2 $\mu$N at a scanning speed of 40 $\mu$m/s to acquire a surface irregularity image. A difference between the lowest height of the non-worn region and the lowest height of the worn region was treated as a maximum abrasion depth. It can be determined that the abrasion can be suppressed as the maximum abrasion depth is smaller than the contact load at the time of abrasion.

(vii) Physical washing (air washing) test

In a tubular case having an inner diameter of 200 mm, 10,000 hollow fiber membranes having an outer diameter of 1.4 mm were loaded, and both ends were potted with an epoxy resin to prepare a hollow fiber membrane module having a filling rate of 49%. The hollow fiber membranes were filled in the case such that $(X - Y)/X \times 100 = 10$ was satisfied between a distance Y between the potting at both ends and an average length X of the hollow fiber membranes. A suspension of 4000 mg/L of activated carbon for water treatment "SHIRASAGI C" (trade name) manufactured by Osaka Gas Chemicals Co., Ltd. was filled in the hollow fiber membrane module. The hollow fiber membrane module was installed so that the longitudinal direction of the tubular case was taken along the up and down direction, and air was introduced from the lower part of the hollow fiber membrane module at 100 NL/min and air-washed in a state where a side nozzle on a side surface of the tubular case near an upper end part was opened. After a lapse of 24 hours, the hollow fiber membrane was cut out, and the removal rate with a weight-average molecular weight of 40,000 Da was evaluated. It is an accelerated evaluation of abrasion by air washing using activated carbon which is hard turbid matter as a model, and it can be determined that abrasion can be suppressed as the performance variation is smaller.

(viii) Removal rate of dextran of 40,000 Da

With distilled water, 1,000 ppm of dextran (manufactured by Sigma-Aldrich Co. LLC; weight-average molecular weight: 40,000 Da) was mixed to prepare an aqueous dextran solution. The prepared aqueous dextran solution was supplied to the hollow fiber membrane at 25°C so as to have a transmembrane pressure difference of 10 kPa and subjected to crossflow filtration at a crossflow linear velocity of 1.0 m/sec to discard 1.3 $g/m^2$ of the permeate per membrane area, and then 2.0 $g/m^2$ of the permeate was sampled. The aqueous dextran solution (raw solution) supplied to the hollow fiber membrane was sampled at the timing when the permeate was sampled. The refractive indices of the permeate and the raw solution were measured, and the removal rate T (%) was determined on the basis of Formula (3).

$$T = \{(\text{refractive index of raw solution}) - (\text{refractive index of permeate})\}/(\text{refractive index of raw solution}) \times 100 \qquad \text{Formula (3)}$$

(ix) Pure water permeability of hollow fiber membrane

A small module having an effective length of 200 mm composed of four hollow fiber membranes was prepared. Distilled water was fed to the outer side of the hollow fiber membrane under the conditions of a temperature of 25°C and a filtration differential pressure of 10 kPa over 1 hour, the whole amount thereof was filtered, and the amount ($m^3$) of permeate water thus obtained was measured, converted into a value per unit time (h) and unit membrane area ($m^2$), and further converted into a pressure (50 kPa) to calculate the pure water permeability.

(x) Virus removal rate

Bacteriophage MS-2 ATCC 15597-B1 (MS-2 phage, particle diameter: about 25 nm), which is a test virus, was added to a liquid to be filtered to prepare a test raw solution containing MS-2 phage at a concentration of about $1.0 \times 10^7$ PFU/mL. As a liquid to be filtered, a solution (TOC; 20 mg/L, turbidity; 17 NTU) obtained by adding activated carbon for water treatment "SHIRASAGI C" (trade name) manufactured by Osaka Gas Chemicals Co., Ltd. to waste water of a chemical factory so as to be 5 mg/L was used. This test raw solution was filtered under the conditions of a temperature of 25°C and a filtration differential pressure of 100 kPa by the hollow fiber membrane module used in (xi), and the 200 $mL/m^2$ of the permeate after filtration per membrane area was sampled. Based on the method of Overlay agar assay, Standard Method 9211-D (APHA, 1998, Standard methods for the examination of water and wastewater, 18th ed.), the diluted raw solution and 1 mL of the permeate were each inoculated into a petri dish for assay, and the plaque was counted to determine the concentration of the MS-2 phage before and after the filtration test. The virus removal rate (log): TV was calculated according to the following Formula (4) using these concentrations. A measure of the high safety and the favorable removal rate is 3.0 or more.

$$\text{Virus removal rate (log)} = -\log_{10}\{(\text{MS-2 phage concentration in filtrate})/(\text{MS-2 phage concentration in raw solution}\} \qquad \text{Formula (4)}$$

(xi) Filtration test

In a tubular case having an inner diameter of 200 mm, 10,000 hollow fiber membranes having an outer diameter of 1.4 mm were loaded, and both ends were potted with an epoxy resin to prepare a hollow fiber membrane module having a filling rate of 49%. The hollow fiber membranes were filled in the case such that $(X - Y)/X \times 100 = 10$ was satisfied between a distance Y between the potting at both ends and an average length X of the hollow fiber membranes. The following test was performed using the obtained hollow fiber membrane module. Lake water (fresh water of Biwako, Japan) (TOC; 5 mg/L, turbidity; 5 NTU) or a solution (TOC; 20 mg/L, turbidity; 17 NTU) obtained by adding 5 mg/L of activated carbon for water treatment "SHIRASAGI C" manufactured by Osaka Gas Chemicals Co., Ltd. to waste water from a chemical factory was supplied as a to-be-filtered liquid to the hollow fiber membrane module at 25°C. It was supplied so as to have a transmembrane pressure difference of 100 kPa, to filter the entire amount thereof, and the amount of the permeate was measured. When the amount of the permeate reached 28 L/m$^2$ per membrane area, backfiltration was performed until the backfiltration permeation amount reached 3 L/m$^2$ so that the transmembrane pressure difference was 150 kPa. Simultaneously with the backfiltration, an air-washing operation was performed in which a mixed flow of the liquid to be filtered and air was caused to flow to the outer side of the hollow fiber membrane at a flow rate of 0.3 m/s at a membrane surface linear velocity, and the liquid to be filtered in the hollow fiber membrane module was discharged. Filtration, backfiltration, and air washing were repeatedly performed, and the ratio (F2/F1) of the filtration fluxes between the filtration flux (F1) immediately after the start of filtration and the filtration flux (F2) immediately after the start of filtration after the amount of the permeate per unit membrane area reached 600 L/m$^2$ or more was calculated and defined as the initial ratio of the filtration fluxes. As the initial ratio of the filtration fluxes is closer to 1, the initial characteristics are maintained, the hollow fiber membrane is less likely to be clogged even after long-term use, and the standard at which good filtration can be maintained is 0.50 or more.

(Example 1)

As the hollow fiber membrane, a composite hollow fiber membrane including a supporting membrane obtained by the following production method was used. A supporting membrane raw solution was prepared by mixing 38 mass% of PVDF (manufactured by Kureha Corporation; KF 1300, weight-average molecular weight: 350,000 Da) and 62 mass% of $\gamma$-butyrolactone and dissolving them at 160°C. The supporting membrane raw solution was discharged from a double tube spinneret with an accompanying flow of an 85-mass% aqueous $\gamma$-butyrolactone solution as a hollow-part forming liquid. The discharged supporting membrane raw solution was coagulated in a cooling bath containing an 85-mass% aqueous $\gamma$-butyrolactone solution at a temperature of 20°C placed 30 mm below the spinneret to prepare a hollow fiber-like supporting membrane having a spherical structure. The supporting membrane had an outer diameter of 1300 $\mu$m and an inner diameter of 800 $\mu$m.

A polymer solution was prepared by mixing 12 mass% of linear PVDF1 (manufactured by Arkema K.K.; "Kynar" (registered trademark) 710, weight-average molecular weight: 180,000 Da), 4.8 mass% of cellulose diacetate (manufactured by Eastman Chemical Company; CA-398-3), 2.4 mass% of cellulose triacetate (manufactured by Eastman Chemical Company; CA-436-80S), 68.8 mass% of N-methyl-2-pyrrolidone (hereinafter referred to as "NMP"), and 12 mass% of 2-pyrrolidone (hereinafter referred to as "2P") and stirring them at 120°C for 4 hours. The self-diffusion coefficient of the polymer in the polymer solution was as small as $1.0 \times 10^{-11}$ m$^2$/s.

Next, the polymer solution at 50°C was uniformly applied to the outer surface of the hollow fiber-like supporting membrane at 10 m/min (thickness: 60 $\mu$m). The supporting membrane to which the polymer solution was applied was taken up at 10 m/min, and 1 second after application, the product was passed through a coagulation bath of distilled water at 25°C so as to be immersed for 10 seconds and coagulated to form a composite hollow fiber membrane having an outer diameter of 1.4 mm and a three-dimensional network structure on the outer side. The surface elastic modulus of the outer side of the hollow fiber membrane was as high as 310 MPa. In the hollow fiber membrane, the cross-sectional porosity of the outer surface part from the outside surface to a thickness of 5 $\mu$m was as low as 36%. The hollow fiber membrane did not include macrovoids. An image obtained by observing a cross-section of the outer surface part of the hollow fiber membrane with a TEM is shown in Fig. 3. The pure water permeability of the hollow fiber membrane was 0.4 m$^3$/m$^2$/h/50 kPa. The value $\alpha$ obtained by dividing the number of pores on the outer surface by the average pore diameter of the outer surface was as high as 62.

A hollow fiber membrane module was prepared using the obtained hollow fiber membrane, and the (xi) filtration test was performed. The results of evaluation using lake water as a liquid to be filtered are shown in Table 1. The filtration amount ratio (F2/F1) was as good as 0.7. The removal rate after the filtration test was equivalent to that before the filtration test.

(Example 2)

The (xi) filtration test was performed using the same hollow fiber membrane module as in Example 1. The results of evaluation using a liquid to be filtered obtained by adding activated carbon to the factory waste water are shown in Table 1. The filtration amount ratio (F2/F1) was as good as 0.6. The removal rate after the filtration test was improved more than that before the filtration test. At a relatively high turbidity and TOC, a liquid to be filtered added with activated carbon was supplied to a hollow fiber membrane module using a membrane having a high surface elastic modulus, and as a result, a high removal rate was shown.

(Comparative Example 1)

A composite hollow fiber membrane was obtained by performing membrane formation in the same manner as in Example 1 except that the composition of the polymer solution was 12 mass% of PVDF1 (manufactured by Arkema K.K.; "Kynar" (registered trademark) 710, weight-average molecular weight: 180,000 Da), 4.0 mass% of cellulose diacetate (manufactured by Eastman Chemical Company; CA-398-3), 4.0 mass% of cellulose triacetate (manufactured by Eastman Chemical Company; CA-436-80S), and 80.0 mass% of NMP, and the temperature of the coagulation bath was set to 40°C. The self-diffusion coefficient of the polymer in the polymer solution was as large as $1.8 \times 10^{-11}$ m$^2$/s. The surface elastic modulus of the outer side of the obtained hollow fiber membrane was as low as 150 MPa. In the hollow fiber membrane, the cross-sectional porosity of the outer surface part from the outside surface to a thickness of 5 $\mu$m was as high as 57%. The hollow fiber membrane did not include macrovoids. The value $\alpha$ obtained by dividing the number of pores on the outer surface by the average pore diameter of the outer surface was as low as 13.

A hollow fiber membrane module was prepared using the obtained hollow fiber membrane, and the (xi) filtration test was performed. The results of evaluation using a liquid to be filtered obtained by adding activated carbon to the factory waste water are shown in Table 1. The filtration amount ratio (F2/F1) was as low as 0.4. The removal rate before the filtration test was as low as 55%, and the removal rate after the filtration test was reduced more than that before the filtration test. At a relatively high turbidity and TOC, a liquid to be filtered added with activated carbon was supplied to a hollow fiber membrane module using a membrane having a low surface elastic modulus, and as a result, the removal rate was reduced.

(Comparative Example 2)

A composite hollow fiber membrane was obtained by performing membrane formation in the same manner as in Example 1 except that the composition of the polymer solution was 12 mass% of branched PVDF2 (manufactured by Solvay Specialty Chemicals; Solef 9009), 7 mass% of cellulose triacetate (manufactured by Daicel Corporation; LT-35), and 81 mass% of NMP, and the temperature of the coagulation bath was set to 15°C. The surface elastic modulus of the outer side of the hollow fiber membrane was as low as 98 MPa. In the hollow fiber membrane, the cross-sectional porosity of the outer surface part from the outside surface to a thickness of 5 $\mu$m was as high as 59%. A large amount of macrovoids were present in a region including the outer surface part of the hollow fiber membrane. The value $\alpha$ obtained by dividing the number of pores on the outer surface by the average pore diameter of the outer surface was as low as 6.

A hollow fiber membrane module was prepared using the obtained hollow fiber membrane, and the (xi) filtration test was performed. The results of evaluation using a liquid to be filtered obtained by adding activated carbon to the factory waste water are shown in Table 1. The filtration amount ratio (F2/F1) was as low as 0.4. The removal rate before the filtration test was as high as 71%, but the removal rate after the filtration test was reduced more than that before the filtration test. At a relatively high turbidity and TOC, a liquid to be filtered added with activated carbon was supplied to a hollow fiber membrane module using a membrane having a low surface elastic modulus and many macrovoids, and as a result, the removal rate was reduced.

(Example 3)

A hollow fiber membrane module was prepared using the hollow fiber membrane obtained in Example 1, and the (vii) physical washing (air washing) test was performed. The evaluation results are shown in Table 2. The change in the removal rate T of dextran of 40,000 Da after the physical washing was small, and high removability was maintained even after the physical washing.

(Example 4)

A composite hollow fiber membrane was formed in the same manner as in Example 1 except that the composition of the polymer solution was 12 mass% of PVDF1 (manufactured by Arkema K.K.; "Kynar" (registered trademark) 710, weight-average molecular weight: 180,000 Da), 4.8 mass% of cellulose diacetate (manufactured by Eastman Chemical Company; CA-398-3), 2.4 mass% of cellulose triacetate (manufactured by Eastman Chemical Company; CA-436-80S), 60.6 mass% of NMP, and 20.2 mass% of $\varepsilon$-caprolactam (hereinafter referred to as "CL"), and the temperature of the coagulation bath was set to 40°C. The surface elastic modulus of the outer side of the hollow fiber membrane was as high as 253 MPa. In the hollow fiber membrane, the cross-sectional porosity of the outer surface part from the outside surface to a thickness of 5 $\mu$m was as low as 38%. The hollow fiber membrane did not include macrovoids. The pure water permeability of the hollow fiber membrane was 0.3 m$^3$/m$^2$/h/50 kPa.

A hollow fiber membrane module was prepared using the obtained hollow fiber membrane, and the (vii) physical washing (air washing) test was performed. The evaluation results are shown in Table 2. The change in the removal rate T of dextran of 40,000 Da after the physical washing was small, and high removability was maintained even after the physical washing.

(Example 5)

A composite hollow fiber membrane was formed in the same manner as in Example 4 except that the composition of the polymer solution was 12 mass% of PVDF1 (manufactured by Arkema K.K.; "Kynar" (registered trademark) 710, weight-average molecular weight: 180,000 Da), 4.8 mass% of cellulose diacetate (manufactured by Eastman Chemical Company; CA-398-3), 2.4 mass% of cellulose triacetate (manufactured by Eastman Chemical Company; CA-436-80S), 52.5 mass% of NMP, and 28.3 mass% of CL. The surface elastic modulus of the outer side of the hollow fiber membrane was as high as 294 MPa. In the hollow fiber membrane, the cross-sectional porosity of the outer surface part from the outside surface to a thickness of 5 $\mu$m was as low as 35%. The hollow fiber membrane did not include macrovoids. The pure water permeability of the hollow fiber membrane was 0.2 $m^3/m^2/h/50$ kPa.
A hollow fiber membrane module was prepared using the obtained hollow fiber membrane, and the (vii) physical washing (air washing) test was performed. The evaluation results are shown in Table 2. The change in the removal rate T of dextran of 40,000 Da after the physical washing was small, and high removability was maintained even after the physical washing.

(Example 6)

A composite hollow fiber membrane was formed in the same manner as in Practical Example 4 except that the composition of the polymer solution was 12 mass% of PVDF1 (manufactured by Arkema K.K.; "Kynar" (registered trademark) 710, weight-average molecular weight: 180,000 Da), 4.8 mass% of cellulose diacetate (manufactured by Eastman Chemical Company; CA-398-3), 2.4 mass% of cellulose triacetate (manufactured by Eastman Chemical Company; CA-436-80S), 44.4 mass% of NMP, and 36.4 mass% of CL. The surface elastic modulus of the outer side of the hollow fiber membrane was as high as 352 MPa. In the hollow fiber membrane, the cross-sectional porosity of the outer surface part from the outside surface to a thickness of 5 $\mu$m was as low as 32%. The hollow fiber membrane did not include macrovoids. The pure water permeability of the hollow fiber membrane was 0.2 $m^3/m^2/h/50$ kPa.
A hollow fiber membrane module was prepared using the obtained hollow fiber membrane, and the (vii) physical washing (air washing) test was performed. The evaluation results are shown in Table 2. The change in the removal rate T of dextran of 40,000 Da after the physical washing was small, and high removability was maintained even after the physical washing.

(Comparative Example 3)

A hollow fiber membrane module was prepared using the hollow fiber membrane obtained in Comparative Example 1, and the (vii) physical washing (air washing) test was performed. The evaluation results are shown in Table 3. The removal rate before the physical washing test was as low as 55%, and the removal rate after the physical washing test was reduced more than that before the physical washing test.

(Comparative Example 4)

A hollow fiber membrane module was prepared using the hollow fiber membrane obtained in Comparative Example 2, and the (vii) physical washing (air washing) test was performed. The evaluation results are shown in Table 3. The removal rate before the physical washing test was as high as 70%, but the removal rate after the physical washing test was reduced more than that before the physical washing test.

(Comparative Example 5)

The hollow fiber-like supporting membrane in Example 1 was used, but the outer surface of the hollow fiber membrane module of the present invention was not formed on the outer surface of the supporting membrane. The surface elastic modulus of the outer side of the hollow fiber membrane was as low as 130 MPa. In the hollow fiber membrane, the cross-sectional porosity of the outer surface part from the outside surface to a thickness of 5 $\mu$m was as high as 62%.
A hollow fiber membrane module was prepared using the obtained hollow fiber membrane, and the (vii) physical washing (air washing) test was performed. The evaluation results are shown in Table 3. The removal rate before the physical washing test was as low as 20%, and the removal rate after the physical washing test was reduced more than that before the physical washing test.

(Example 7)

The results of the (vi) wear test performed using the hollow fiber membrane obtained in Example 1 are shown in Fig. 6. The maximum abrasion depth at a contact load of 30 $\mu$N was as small as 150 nm, and it was found that abrasion of the hollow fiber membrane outer surface was suppressed.

(Comparative Example 6)

The results of the (vi) wear test performed using the hollow fiber membrane obtained in Comparative Example 1 are shown in Fig. 6. As compared with Example 7, it was found that the abrasion depth is large and the hollow fiber membrane is likely to be worn even when the hollow fiber membrane is worn at any contact load.

(Example 8)

Using the hollow fiber membrane module obtained in Example 1, the (x) virus removal rate TV was evaluated before and after the (xi) filtration test using a liquid to be filtered obtained by adding activated carbon to factory waste water, and as a result, both the virus removal rates before and after the filtration test were 4.5. At a relatively high turbidity and TOC, even after a liquid to be filtered added with activated carbon was treated, the liquid to be filtered containing a high concentration of virus showed a high removal rate for a long period of time.

(Comparative Example 7)

Using the hollow fiber membrane module obtained in Comparative Example 1, the virus removal rate TV described in (x) was evaluated before and after the (xi) filtration test using a liquid to be filtered obtained by adding activated carbon to factory waste water, and as a result, the virus removal rate before the filtration test was as high as 3.6, and the virus removal rate after the filtration test was reduced to 2.8. At a relatively high turbidity and TOC, after a liquid to be filtered added with activated carbon was treated, it was not possible to maintain a high removal rate for a long period of time with respect to the liquid to be filtered containing a high concentration of virus. This is presumed to be because the surface elastic modulus of the hollow fiber membrane of the hollow fiber membrane module was low, so that the outer surface was abraded.

(Example 9)

A composite hollow fiber membrane was obtained by performing membrane formation in the same manner as in Comparative Example 1 except that the temperature of the coagulation bath was set to 6°C. The self-diffusion coefficient of the polymer in the polymer solution was as large as $1.8\times10^{-11}$ m$^2$/s. The surface elastic modulus of the outer side of the hollow fiber membrane was as high as 458 MPa. In the hollow fiber membrane, the cross-sectional porosity of the outer surface part from the outside surface to a thickness of 5 $\mu$m was as low as 3%. The hollow fiber membrane did not include macrovoids. The number of pores on the outer surface was as small as 78 pores/$\mu$m$^2$, and the opening ratio of the outer surface was as low as 0.5%. The average pore diameter of the outer surface was as small as 8.0 nm. The value $\alpha$ obtained by dividing the number of pores on the outer surface by the average pore diameter of the outer surface was as low as 10.
A hollow fiber membrane module was prepared using the obtained hollow fiber membrane, and the (xi) filtration test was performed. As a result of evaluation using a liquid to be filtered obtained by adding activated carbon to the factory waste water, the filtration amount ratio (F2/F1) was as low as 0.4. The removal rate before the filtration test was as high as 70%, the removal rate after the filtration test was not changed as compared with that before the filtration test, and a high removal rate was maintained.

[Table 1]

[Table 1]

| | | Example 1 | Example 2 | Example 9 | Comparative Example 1 | Comparative Example 2 |
|---|---|---|---|---|---|---|
| Surface elastic modulus | MPa | 310 | 310 | 458 | 150 | 98 |
| Filling rate | % | 48 | 48 | 48 | 48 | 48 |

(continued)

| | | Example 1 | Example 2 | Example 9 | Comparative Example 1 | Comparative Example 2 |
|---|---|---|---|---|---|---|
| Opening ratio of outer surface | % | 2.4 | 2.4 | 0.5 | 11 | 0.1 |
| Average pore diameter of outer surface | nm | 7.2 | 7.2 | 8.0 | 15 | 8.2 |
| Cross-sectional porosity of outer surface part | % | 36 | 36 | 3 | 57 | 59 |
| Cross-sectional porosity of inner surface part | % | 62 | 62 | 62 | 62 | 62 |
| Average value of thicknesses of columns | nm | 32 | 32 | 10 | 66 | 50 |
| Density of columns | columns/$\mu$m | 20 | 20 | 40 | 6 | 8 |
| $(X-Y)/X \times 100$ | % | 10 | 10 | 10 | 10 | 10 |
| Number of pores on outer surface | pores/$\mu$m$^2$ | 444 | 444 | 78 | 55 | 49 |
| (Number of pores) ÷ (average pore diameter) of outer surface: $\alpha$ | pores/$\mu$m$^2$/nm | 62 | 62 | 10 | 13 | 6 |
| Liquid to be filtered | - | Lake water | Waste water | Waste water | Waste water | Waste water |
| Turbidity | NTU | 5 | 17 | 17 | 17 | 17 |
| TOC | mg/L | 5 | 20 | 20 | 20 | 20 |
| Additive force amount of activated carbon | mg/L | 0 | 5 | 5 | 5 | 5 |
| Filtration amount ratio before and after filtration test | - | 0.7 | 0.6 | 0.4 | 0.4 | 0.4 |
| Dextran removal rate before filtration test: T | % | 72 | 72 | 70 | 55 | 71 |
| Dextran removal rate after filtration test: T' | % | 70 | 75 | 70 | 45 | 41 |

[Table 2]

[Table 2]

| | | Example 3 | Example 4 | Example 5 | Example 6 |
|---|---|---|---|---|---|
| Surface elastic modulus | MPa | 310 | 253 | 294 | 352 |
| Filling rate | % | 48 | 48 | 48 | 48 |
| Opening ratio of outer surface | % | 2.4 | 4.1 | 6.5 | 5.8 |
| Average pore diameter of outer surface | nm | 7.2 | 7.6 | 7.9 | 8.4 |
| Cross-sectional porosity of outer surface part | % | 36 | 38 | 35 | 32 |

(continued)

| | | Example 3 | Example 4 | Example 5 | Example 6 |
|---|---|---|---|---|---|
| Cross-sectional porosity of inner surface part | % | 62 | 62 | 62 | 62 |
| Average value of thicknesses of columns | nm | 32 | 31 | 33 | 32 |
| Density of columns | columns/$\mu$m | 20 | 15 | 21 | 28 |
| (X-Y)/X$\times$100 | % | 10 | 10 | 10 | 10 |
| Number of pores on outer surface | pores/$\mu$m$^2$ | 444 | 681 | 999 | 788 |
| (Number of pores) ÷ (average pore diameter) of outer surface: $\alpha$ | pores/$\mu$m$^2$/nm | 62 | 90 | 126 | 94 |
| Dextran removal rate before physical washing test: T | % | 72 | 69 | 71 | 74 |
| Dextran removal rate after physical washing test: T' | % | 70 | 64 | 70 | 72 |

[Table 3]

[Table 3]

| | | Comparative Example 3 | Comparative Example 4 | Comparative Example 5 |
|---|---|---|---|---|
| Surface elastic modulus | MPa | 150 | 98 | 130 |
| Filling rate | % | 48 | 48 | 48 |
| Opening ratio of outer surface | % | 11 | 0.1 | 40 |
| Average pore diameter of outer surface | nm | 15 | 7.3 | 316 |
| Cross-sectional porosity of outer surface part | % | 57 | 59 | 62 |
| Cross-sectional porosity of inner surface part | % | 62 | 62 | 62 |
| Average value of thicknesses of columns | nm | 66 | 50 | 350 |
| Density of columns | columns/$\mu$m | 6 | 8 | 1 |
| (X-Y)/X$\times$100 | % | 10 | 10 | 10 |
| Number of pores on outer surface | pores/$\mu$m$^2$ | 196 | 49 | 4 |
| (Number of pores) ÷ (average pore diameter) of outer surface: $\alpha$ | pores/$\mu$m$^2$/nm | 13 | 6 | 0.01 |
| Dextran removal rate before physical washing test: T | % | 55 | 70 | 20 |
| Dextran removal rate after physical washing test: T' | % | 41 | 45 | 15 |

DESCRIPTION OF REFERENCE SIGNS

100: Hollow fiber membrane module

110: First end

120: Second end

1: Tubular case

2: Hollow fiber membrane

3: First potting part

4: Second potting part

4A: Through hole

4B: Clearance

5: Upper cap

6: Lower cap

7: Liquid inlet

8: Permeate outlet

9: Liquid outlet

10: Flow rectification cylinder

11: Flow rectification hole

12: Second potting part case

13: Non-worn region in wear test of hollow fiber membrane outer surface

14: Worn region in wear test of hollow fiber membrane outer surface

101: Outer surface

102: Outer surface part

103: Line of outer surface of hollow fiber membrane

104: Line perpendicular to outer surface

105: Column thickness

300: Polymer solution

301: Polymer-rich phase

302: Solvent-rich phase

**Claims**

1. A hollow fiber membrane module comprising:

at least a tubular case having a first end and a second end in a height direction of a tubular member; a plurality of hollow fiber membranes accommodated between the first end and the second end in the tubular case; a liquid inlet through which a to-be-filtered liquid flows into the tubular case; and a permeate outlet through which a permeate having permeated through the hollow fiber membrane flows out from the tubular case, the liquid inlet being communicated with outer surfaces of the plurality of hollow fiber membranes; and a first potting part which bonds end parts of the plurality of hollow-fiber membranes located on the first end side of the tubular case while letting the end parts be open, wherein when a cross-sectional area in the tubular case is taken as 100% in a cross-section perpendicular to the height direction of the tubular case, a ratio of an area occupied by the plurality of hollow fiber membranes including the hollow parts (hereinafter referred to as a filling rate) is 40% to 80%, and a surface elastic modulus of the outer surfaces of the plurality of hollow fiber membranes is 200 MPa to 500 MPa.

2. The hollow fiber membrane module according to claim 1, wherein the number of pores observed in the outer surface of the hollow fiber membrane (hereinafter referred to as surface pores) per unit area is 200 pores/$\mu$m$^2$ to 2000 pores/$\mu$m$^2$.

3. The hollow fiber membrane module according to claim 1 or 2, wherein an opening ratio is 1% to 10% with respect to an area of the outer surface of the hollow fiber membrane.

4. The hollow fiber membrane module according to any one of claims 1 to 3, wherein an average pore diameter of the outer surface of the hollow fiber membrane (hereinafter referred to as a surface pore diameter) is 5 nm to 20 nm.

5. The hollow fiber membrane module according to any one of claims 2 to 4, wherein a value $\alpha$ obtained by dividing the number [pores/$\mu$m$^2$] of surface pores per unit area by the surface pore diameter [nm] is 30 pores/$\mu$m$^2$/nm to 150 pores/$\mu$m$^2$/nm.

6. The hollow fiber membrane module according to any one of claims 1 to 5, wherein in a sliced cross-section of the hollow fiber membrane, a cross-sectional porosity in a region from the outer surface of the hollow fiber membrane to 5 $\mu$m (hereinafter referred to as an outer surface part) is 20% to 50%.

7. The hollow fiber membrane module according to any one of claims 1 to 6, wherein hollow fiber membrane structures between pores in the outer surface part of the hollow fiber membrane is used as columns, and an average value of thicknesses of the columns is 20 nm to 60 nm.

8. The hollow fiber membrane module according to any one of claims 1 to 7, wherein a density of the columns is 10 columns/um to 50 columns/$\mu$m.

9. The hollow fiber membrane module according to any one of claims 1 to 8, comprising a second potting part bonding a bundle of the plurality of hollow fiber membranes located on the second end side of the tubular case, wherein when an average length of the plurality of hollow fiber membranes present between a second end part side of the first potting part and a first end part side of the second potting part is denoted as X, and a length in the height direction between the second end part side of the first potting part and the first end part side of the second potting part in the tubular case is denoted as Y, a relationship of $2 \leq (X - Y)/X \times 100 \leq 20$ (%) is established.

10. The hollow fiber membrane module according to any one of claims 1 to 9, wherein when a to-be-filtered liquid having a turbidity of 3 to 50 NTU is filtered and a permeate is separated from the to-be-filtered liquid, a virus removal rate of the permeate is 4 log or more.

11. The hollow fiber membrane module according to any one of claims 1 to 10, wherein when a to-be-filtered liquid having a turbidity of 3 to 50 NTU is filtered and a permeate is separated from the to-be-filtered liquid, an SDI of the permeate is 3 or less.

12. A filtration operation method of a hollow fiber membrane module, comprising supplying a to-be-filtered liquid having a turbidity of 3 to 50 NTU to the hollow fiber membrane module according to any one of claims 1 to 11 and separating a permeate from the to-be-filtered liquid.

13. A filtration operation method of a hollow fiber membrane module, comprising supplying a to-be-filtered liquid having a total organic carbon (hereinafter referred to as TOC) of 4 to 30 mg/L to the hollow fiber membrane module according to any one of claims 1 to 12 and separating a permeate from the to-be-filtered liquid.

14. A filtration operation method of the hollow fiber membrane module according to any one of claims 1 to 11, the filtration operation method comprising:

    (1) a membrane separation step of supplying a raw solution to the hollow fiber membrane module and separating a suspended substance and a liquid; and
    (2) a washing step of stopping the step (1) and washing the suspended substance accumulated on an outer surface of a hollow fiber membrane or between hollow fiber membranes, wherein the washing step (2) performs an air-washing operation of causing a mixed flow of the raw solution or a liquid having at least a turbidity or TOC equal to or less than the turbidity or TOC of the raw solution and a gas at a flow rate of 0.3 m/s or more and 5.0 m/s or less at a membrane surface linear velocity on the outer surface side of the hollow fiber membrane.

15. A hollow fiber membrane having an opening ratio of 1% to 10% with respect to an area of an outer surface of the hollow fiber membrane and a surface elastic modulus of the outer surface of the hollow fiber membrane of 200 MPa to 500 MPa.

16. A filtration apparatus comprising the hollow fiber membrane module or the hollow fiber membrane according to any one of claims 1 to 11 or claim 15.

【FIG.1】

【FIG.2】

13 : Non-worn region

14 : Worn region

5 μm

5 μm

20 μm

20 μm

【FIG.3】

101

103

102

104

2.0μm

【FIG.4】

(b)

(a)

105

105

104

104

【FIG.5】

(a)

(b)

(c)

300    301    302    301    302

(d)

(e)

(f)

301    302    301    302    301    302

【FIG.6】

○ Example 7
△ Comparative Example 6

## INTERNATIONAL SEARCH REPORT

| | International application No. |
|---|---|
| | **PCT/JP2024/006949** |

**A. CLASSIFICATION OF SUBJECT MATTER**

*B01D 63/02*(2006.01)i; *B01D 65/02*(2006.01)i; *B01D 69/00*(2006.01)i; *B01D 69/02*(2006.01)i; *B01D 69/08*(2006.01)i
FI: B01D63/02; B01D69/00; B01D69/08; B01D69/02; B01D65/02 520

According to International Patent Classification (IPC) or to both national classification and IPC

**B. FIELDS SEARCHED**

Minimum documentation searched (classification system followed by classification symbols)

B01D53/22; B01D61/00-B01D71/82; C02F1/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-97362 A (ASAHI KASEI CHEMICALS CORPORATION) 30 May 2016 (2016-05-30) claims, examples | 1-16 |
| A | JP 7072112 B1 (NITTO DENKO CORPORATION) 19 May 2022 (2022-05-19) claims, examples, fig. 1-3 | 1-16 |
| A | JP 2015-131267 A (ASAHI KASEI CHEMICALS CORPORATION) 23 July 2015 (2015-07-23) claims, examples, fig. 1 | 1-16 |
| A | WO 2017/131126 A1 (TORAY INDUSTRIES, INC.) 03 August 2017 (2017-08-03) claims, examples, fig. 1 | 1-16 |
| A | WO 2006/016573 A1 (TOYO BOSEKI KABUSHIKI KAISHA) 16 February 2006 (2006-02-16) claims, paragraph [0054] | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/006949**

| Patent document cited in search report | | | Publication date (day/month/year) | Patent family member(s) | | | Publication date (day/month/year) |
|---|---|---|---|---|---|---|---|
| JP | 2016-97362 | A | 30 May 2016 | (Family: none) | | | |
| JP | 7072112 | B1 | 19 May 2022 | US | 2023/0144222 | A1 | |
| | | | | claims, examples, fig. 1-3 | | | |
| | | | | EP | 4176962 | A1 | |
| | | | | CN | 116078179 | A | |
| | | | | KR | 10-2023-0065910 | A | |
| JP | 2015-131267 | A | 23 July 2015 | US | 2015/0197431 | A1 | |
| | | | | claims, examples, fig. 1 | | | |
| | | | | CN | 104772041 | A | |
| WO | 2017/131126 | A1 | 03 August 2017 | CN | 108602020 | A | |
| | | | | KR | 10-2018-0103922 | A | |
| WO | 2006/016573 | A1 | 16 February 2006 | US | 2008/0044643 | A1 | |
| | | | | claims, paragraph [0076] | | | |
| | | | | EP | 1795254 | A1 | |
| | | | | CN | 101035606 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015104871 A
- JP H11342320 A
- JP 2010005615 A
- JP 2002070115 A

**Non-patent literature cited in the description**

- **S. L. MAYO** ; **B. D. OLAFSON** ; **W. A. GODDARD III**. *J. Phys. Chem.*, 1990, vol. 94, 8897
- **J. WANG** ; **R. M. WOLF** ; **J. W. CALDWELL** ; **P. A. KOLLMAN** ; **D. A. CASE**. *J. Comput. Chem.*, 2004, vol. 25, 1157
- **W. L. JORGENSEN** ; **D. S. MAXWELL** ; **JULIAN TIRADO-RIVES**. *J. Am. Chem. Soc.*, 1996, vol. 118, 11225
- **B. R. BROOKS** ; **R. E. BRUCCOLERI** ; **B. D. OLAFSON** ; **D. J. STATES, S. SWAMINATHAN** ; **M. KARPLUS**. *J. Comput. Chem.*, 1983, vol. 4, 187
- **HOOVER, W. G.** *Phys. Rev. A*, 1985, vol. 31, 1695
- **H. C. ANDERSEN**. *J. Chem. Phys.*, 1980, vol. 72, 2384
- Standard methods for the examination of water and wastewater. 1998